(19) Europäisches Patentamt
European Patent Office
Office européen des brevets

(11) **EP 4 550 699 A1**

(12) **EUROPEAN PATENT APPLICATION**
published in accordance with Art. 153(4) EPC

(43) Date of publication:
**07.05.2025 Bulletin 2025/19**

(21) Application number: **23841969.1**

(22) Date of filing: **13.06.2023**

(51) International Patent Classification (IPC):
**H04L 1/00** (2006.01)

(52) Cooperative Patent Classification (CPC):
**H04L 1/00**

(86) International application number:
**PCT/CN2023/100030**

(87) International publication number:
**WO 2024/016903 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.07.2022 CN 202210851495**

(71) Applicant: **Huawei Technologies Co., Ltd.
Shenzhen, Guangdong 518129 (CN)**

(72) Inventors:
• **LI, Yiran
Shenzhen, Guangdong 518129 (CN)**
• **XIE, Xinqian
Shenzhen, Guangdong 518129 (CN)**
• **SHAO, Jiafeng
Shenzhen, Guangdong 518129 (CN)**
• **YE, Wei
Shenzhen, Guangdong 518129 (CN)**
• **LI, Hantao
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57)    A communication method and apparatus may be applied to an integrated sensing and communication system. The method includes: A network device sends first information to a terminal device, and correspondingly, the terminal device receives the first information from the network device, where the first information indicates a modulation and coding scheme MCS of a first signal, the MCS of the first signal belongs to a first MCS set, and amplitude of a modulation symbol corresponding to an MCS in the first MCS set is constant. The network device sends the first signal according to the MCS of the first signal, and correspondingly, the terminal device receives the first signal according to the MCS of the first signal; or the terminal device sends the first signal according to the MCS of the first signal, and correspondingly, the network device receives the first signal according to the MCS of the first signal. According to the solutions, when the first MCS set is used in the integrated sensing and communication system, sensing performance can be improved while communication resource utilization is improved and communication performance is ensured.

FIG. 4

## Description

This application claims priority to Chinese Patent Application No. 202210851495.3, filed with the China National Intellectual Property Administration on July 19, 2022 and entitled "COMMUNICATION METHOD AND APPARATUS", which is incorporated herein by reference in its entirety.

## TECHNICAL FIELD

Embodiments of this application relate to the communication field, and in particular, to a communication method and apparatus.

## BACKGROUND

An integrated sensing and communication system integrates a communication function and a sensing function. Communication and radar functions share hardware, to reduce hardware costs. In addition, a large bandwidth of a communication spectrum may be used to achieve high detection precision.

In the integrated sensing and communication system, a base station may send a signal, receive an echo signal of the signal to detect a target, and estimate a speed, a distance, an angle, a moving track, a shape or size, and the like of the detected target. In addition, the base station may further send or receive a communication signal, to interact with a terminal device.

Based on advantages of radar detection and a wireless network, wide application of the integrated sensing and communication system is to be an important trend. Therefore, it is necessary to design a modulation and coding scheme (modulation and coding scheme, MCS) in the integrated sensing and communication system.

## SUMMARY

This application provides a communication method and apparatus, to provide a modulation and coding scheme applicable to an integrated sensing and communication system, and help improve system performance.

According to a first aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The method includes: receiving first information, where the first information indicates a modulation and coding scheme MCS of a first signal; and receiving or sending the first signal according to the MCS of the first signal. The MCS of the first signal belongs to a first MCS set, and amplitude of a modulation symbol corresponding to an MCS in the first MCS set is constant.

According to this solution, this application provides a set of MCSs with constant amplitude of a corresponding modulation symbol. When the MCS set is used in an integrated sensing and communication system, an MCS with constant amplitude has lower requirements on an RCS and a signal-to-noise ratio of a sensed target compared with an MCS with non-constant amplitude. Therefore, the MCS set is used in the integrated sensing and communication system, to improve sensing performance while improving communication resource utilization and ensuring communication performance.

In a possible design, the first signal is used for sensing and communication. According to this possible design, in an integrated sensing and communication scenario, target detection performance during modulation of a sensing-communication signal in an MCS with constant amplitude in the first MCS set is better than target detection performance during modulation of a sensing-communication signal in an MCS with non-constant amplitude. Therefore, when the first signal is a sensing-communication signal, the solution in this application can improve sensing performance while improving resource utilization and ensuring communication performance.

In a possible design, the first MCS set includes a first MCS. A value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or the value obtained by multiplying the coding rate of the first MCS by 1024 is less than or equal to 901, and the modulation scheme of the first MCS is 16PSK.

According to this possible design, when the modulation scheme of the first MCS is QPSK, 8PSK, or 16PSK, the value obtained by multiplying the coding rate by 1024 may reach 948. That is, the MCS provided in this application may have a high coding rate, to increase an amount of transmitted data, and improve communication performance. In addition, when the modulation scheme of the first MCS is 16PSK, and the value obtained by multiplying the coding rate by 1024 is 901, an SNR value range corresponding to an MCS table defined in the existing protocol is met. Applicability is good.

In a possible design, the first MCS set includes a second MCS, a modulation scheme of the second MCS is 8PSK, and a value obtained by multiplying a coding rate of the second MCS by 1024 is greater than or equal to 620.

In a possible design, the first MCS set includes a second MCS, a modulation scheme of the second MCS is 8PSK, and a value obtained by multiplying a coding rate of the second MCS by 1024 is greater than or equal to a first value. The first value is a value obtained by multiplying 1024 by a coding rate at which first spectral efficiency is achieved in an 8PSK modulation scheme in a first signal-to-noise ratio, the first signal-to-noise ratio is a signal-to-noise ratio at a first block error rate, and the first spectral efficiency is spectral efficiency achieved in an MCS with a QPSK modulation scheme in the first signal-to-noise ratio.

In a possible design, the first MCS set includes a third MCS, a modulation scheme of the third MCS is 16PSK, and a value obtained by multiplying a coding rate of the third MCS by 1024 is greater than or equal to 710.

In a possible design, the first MCS set includes a third MCS, a modulation scheme of the third MCS is 16PSK, and a value obtained by multiplying a coding rate of the third MCS by 1024 is greater than or equal to a second value. The second value is a value obtained by multiplying 1024 by a coding rate at which second spectral efficiency is achieved in a 16PSK modulation scheme in a second signal-to-noise ratio, and the second signal-to-noise ratio is a signal-to-noise ratio at a second block error rate. The second spectral efficiency is greater than third spectral efficiency, and the third spectral efficiency is largest spectral efficiency achieved in an MCS with the 8PSK modulation scheme in the first MCS set at the second BLER.

In a possible design, the first MCS set includes a fourth MCS, a modulation scheme of the fourth MCS is QPSK, and a value obtained by multiplying a coding rate of the fourth MCS by 1024 is greater than a threshold. The threshold is a value obtained by multiplying a coding rate of a fifth MCS by 1024, the fifth MCS is an MCS with a QPSK modulation scheme and a highest coding rate in a second MCS set, and the second MCS set includes an MCS with constant amplitude and an MCS with non-constant amplitude.

In a possible design, the first MCS set includes a fourth MCS, a modulation scheme of the fourth MCS is QPSK, and a coding rate of the fourth MCS is higher than a coding rate of a fifth MCS. The fifth MCS is an MCS with a QPSK modulation scheme and a highest coding rate in a second MCS set, and the second MCS set includes an MCS with constant amplitude and an MCS with non-constant amplitude.

According to the foregoing two possible designs, the first MCS set includes an MCS with a QPSK modulation scheme and a high coding rate. In a scenario in which channel quality is good, the fourth MCS may be used to transmit a sensing-communication signal, to improve a coding rate to transmit a larger amount of data, and further improve communication performance. In addition, in a scenario in which sensing is performed by repeatedly transmitting data information, because repeat transmission can improve transmission reliability of the data information, a high coding rate may be used to improve communication performance.

In a possible design, a modulation scheme of an MCS in the first MCS set includes at least one of the following: binary phase shift keying BPSK, QPSK, 8PSK, or 16PSK.

In a possible design, a value obtained by multiplying a coding rate of the $n^{th}$ MCS in the first MCS set by 1024 is a value obtained by multiplying a coding rate of the $n^{th}$ MCS in a third MCS set by 1024, the third MCS set includes an MCS with constant amplitude and an MCS with non-constant amplitude, and n is a positive integer.

In a possible design, the method further includes: receiving second information. The second information indicates that the first MCS set is used for sensing and communication.

According to a second aspect, a communication method is provided. The method may be performed by a network device, or may be performed by a component of the network device, such as a processor, a chip, or a chip system of the network device, or may be implemented by a logical module or software that can implement all or some functions of the network device. The method includes: sending first information, where the first information indicates a modulation and coding scheme MCS of a first signal; and sending or receiving the first signal according to the MCS of the first signal. The MCS of the first signal belongs to a first MCS set, and amplitude of an MCS in the first MCS set is constant.

According to this solution, this application provides a set of MCSs with constant amplitude of a corresponding modulation symbol. When the MCS set is used in an integrated sensing and communication system, an MCS with constant amplitude has lower requirements on electromagnetic wave reflection intensity and a signal-to-noise ratio compared with an MCS with non-constant amplitude. Therefore, the MCS set is used in the integrated sensing and communication system, to improve sensing performance while improving communication resource utilization and ensuring communication performance.

In a possible design, the first signal is used for sensing and communication.

In a possible design, the first MCS set includes a first MCS. A value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or the value obtained by multiplying the coding rate of the first MCS by 1024 is less than or equal to 901, and the modulation scheme of the first MCS is 16PSK.

In a possible design, the first MCS set includes a second MCS, a modulation scheme of the second MCS is 8PSK, and a value obtained by multiplying a coding rate of the second MCS by 1024 is greater than or equal to 620.

In a possible design, the first MCS set includes a second MCS, a modulation scheme of the second MCS is 8PSK, and a value obtained by multiplying a coding rate of the second MCS by 1024 is greater than or equal to a first value. The first value is a value obtained by multiplying 1024 by a coding rate at which first spectral efficiency is achieved in an 8PSK modulation scheme in a first signal-to-noise ratio, the first signal-to-noise ratio is a signal-to-noise ratio at a first block error rate, and the first spectral efficiency is spectral efficiency achieved in an MCS with a QPSK modulation scheme in the first signal-to-noise ratio.

In a possible design, the first MCS set includes a third MCS, a modulation scheme of the third MCS is 16PSK, and a value obtained by multiplying a coding rate of the third MCS by 1024 is greater than or equal to 710.

In a possible design, the first MCS set includes a third MCS, a modulation scheme of the third MCS is 16PSK, and a value obtained by multiplying a coding rate of the third MCS by 1024 is greater than or equal to a second value. The second value is a value obtained by multiplying 1024 by a coding rate at which second spectral efficiency is achieved in a 16PSK modulation scheme in a second signal-to-noise ratio, and the second signal-to-noise ratio is a signal-to-noise ratio at a second block error rate. The second spectral efficiency is greater than third spectral efficiency, and the third spectral efficiency is spectral efficiency that is achieved in an MCS with the 8PSK modulation scheme in the second signal-to-noise ratio.

In a possible design, the first MCS set includes a fourth MCS, a modulation scheme of the fourth MCS is QPSK, and a value obtained by multiplying a coding rate of the fourth MCS by 1024 is greater than a threshold. The threshold is a value obtained by multiplying a coding rate of a fifth MCS by 1024, the fifth MCS is an MCS with a QPSK modulation scheme and a highest coding rate in a second MCS set, and the second MCS set includes an MCS with constant amplitude and an MCS with non-constant amplitude.

In a possible design, the first MCS set includes a fourth MCS, a modulation scheme of the fourth MCS is QPSK, and a coding rate of the fourth MCS is higher than a coding rate of a fifth MCS. The fifth MCS is an MCS with a QPSK modulation scheme and a highest coding rate in a second MCS set, and the second MCS set includes an MCS with constant amplitude and an MCS with non-constant amplitude.

In a possible design, a modulation scheme of an MCS in the first MCS set includes at least one of the following: binary phase shift keying BPSK, QPSK, 8PSK, or 16PSK.

In a possible design, a value obtained by multiplying a coding rate of the $n^{th}$ MCS in the first MCS set by 1024 is a value obtained by multiplying a coding rate of the $n^{th}$ MCS in a third MCS set by 1024, the third MCS set includes an MCS with constant amplitude and an MCS with non-constant amplitude, and n is a positive integer.

In a possible design, the method further includes: sending second information. The second information indicates that the first MCS set is used for sensing and communication.

For technical effects brought by any possible design of the second aspect, refer to the technical effects brought by corresponding designs of the first aspect. Details are not described herein again.

With reference to the first aspect or the second aspect, in a possible design, the first MCS set includes at least one of the following MCSs:

a modulation order: 2, and a target coding rate ×[1024]: 719;
a modulation order: 2, and a target coding rate ×[1024]: 772;
a modulation order: 2, and a target coding rate ×[1024]: 841;
a modulation order: 2, and a target coding rate ×[1024]: 910;
a modulation order: 2, and a target coding rate ×[1024]: 948;
a modulation order: 3, and a target coding rate ×[1024]: 666;
a modulation order: 3, and a target coding rate ×[1024]: 719;
a modulation order: 3, and a target coding rate ×[1024]: 772;
a modulation order: 3, and a target coding rate ×[1024]: 822;
a modulation order: 3, and a target coding rate ×[1024]: 873;
a modulation order: 3, and a target coding rate ×[1024]: 910; or
a modulation order: 3, and a target coding rate ×[1024]: 948.

The modulation order 2 indicates that a modulation scheme is QPSK, and the modulation order 3 indicates that a modulation scheme is 8PSK.

With reference to the first aspect or the second aspect, in a possible design, the first MCS set includes at least one of the following MCSs:

a modulation order: 2, and a target coding rate ×[1024]: 308;
a modulation order: 2, and a target coding rate ×[1024]: 379;
a modulation order: 2, and a target coding rate ×[1024]: 449;
a modulation order: 2, and a target coding rate ×[1024]: 526;
a modulation order: 2, and a target coding rate ×[1024]: 602;
a modulation order: 2, and a target coding rate ×[1024]: 679;
a modulation order: 2, and a target coding rate ×[1024]: 772;

a modulation order: 2, and a target coding rate ×[1024]: 841;
a modulation order: 2, and a target coding rate ×[1024]: 948;
a modulation order: 3, and a target coding rate ×[1024]: 679;
a modulation order: 3, and a target coding rate ×[1024]: 772;
a modulation order: 3, and a target coding rate ×[1024]: 841;
a modulation order: 3, and a target coding rate ×[1024]: 948;
a modulation order: 4, and a target coding rate ×[1024]: 772;
a modulation order: 4, and a target coding rate ×[1024]: 841; or
a modulation order: 4, and a target coding rate ×[1024]: 948.

The modulation order 2 indicates that a modulation scheme is QPSK, the modulation order 3 indicates that a modulation scheme is 8PSK, and the modulation order 4 indicates that a modulation scheme is 16PSK.

With reference to the first aspect or the second aspect, in a possible design, the first MCS set includes at least one of the following MCSs:

a modulation order: 2, and a target coding rate ×[1024]: 635;
a modulation order: 2, and a target coding rate ×[1024]: 679;
a modulation order: 2, and a target coding rate ×[1024]: 748;
a modulation order: 2, and a target coding rate ×[1024]: 798;
a modulation order: 2, and a target coding rate ×[1024]: 850;
a modulation order: 2, and a target coding rate ×[1024]: 889;
a modulation order: 2, and a target coding rate ×[1024]: 910;
a modulation order: 2, and a target coding rate ×[1024]: 948;
a modulation order: 3, and a target coding rate ×[1024]: 707;
a modulation order: 3, and a target coding rate ×[1024]: 748;
a modulation order: 3, and a target coding rate ×[1024]: 809;
a modulation order: 3, and a target coding rate ×[1024]: 850;
a modulation order: 3, and a target coding rate ×[1024]: 901;
a modulation order: 3, and a target coding rate ×[1024]: 921; or
a modulation order: 3, and a target coding rate ×[1024]: 948.

The modulation order 2 indicates that a modulation scheme is QPSK, and the modulation order 3 indicates that a modulation scheme is 8PSK.

With reference to the first aspect or the second aspect, in a possible design, the first MCS set includes at least one of the following MCSs:

a modulation order: 2, and a target coding rate ×[1024]: 251;
a modulation order: 2, and a target coding rate ×[1024]: 308;
a modulation order: 2, and a target coding rate ×[1024]: 379;
a modulation order: 2, and a target coding rate ×[1024]: 449;
a modulation order: 2, and a target coding rate ×[1024]: 526;
a modulation order: 2, and a target coding rate ×[1024]: 602;
a modulation order: 2, and a target coding rate ×[1024]: 695;
a modulation order: 2, and a target coding rate ×[1024]: 775;
a modulation order: 2, and a target coding rate ×[1024]: 850;
a modulation order: 2, and a target coding rate ×[1024]: 921;
a modulation order: 2, and a target coding rate ×[1024]: 948;
a modulation order: 3, and a target coding rate ×[1024]: 707;
a modulation order: 3, and a target coding rate ×[1024]: 795;
a modulation order: 3, and a target coding rate ×[1024]: 850;
a modulation order: 3, and a target coding rate ×[1024]: 921; or
a modulation order: 3, and a target coding rate ×[1024]: 948.

The modulation order 2 indicates that a modulation scheme is QPSK, and the modulation order 3 indicates that a modulation scheme is 8PSK.

With reference to the first aspect or the second aspect, in a possible design, the first MCS set includes at least one of the following MCSs:

a modulation order: 2, and a target coding rate ×[1024]: 748;
a modulation order: 2, and a target coding rate ×[1024]: 798;
a modulation order: 2, and a target coding rate ×[1024]: 871;
a modulation order: 2, and a target coding rate ×[1024]: 910;
a modulation order: 2, and a target coding rate ×[1024]: 948;
a modulation order: 3, and a target coding rate ×[1024]: 707;
a modulation order: 3, and a target coding rate ×[1024]: 748;
a modulation order: 3, and a target coding rate ×[1024]: 809;
a modulation order: 3, and a target coding rate ×[1024]: 850;
a modulation order: 3, and a target coding rate ×[1024]: 901;
a modulation order: 3, and a target coding rate ×[1024]: 921;
a modulation order: 3, and a target coding rate ×[1024]: 948;
a modulation order: 4, and a target coding rate ×[1024]: 748;
a modulation order: 4, and a target coding rate ×[1024]: 798;
a modulation order: 4, and a target coding rate ×[1024]: 850;
a modulation order: 4, and a target coding rate ×[1024]: 870;
a modulation order: 4, and a target coding rate ×[1024]: 901;
a modulation order: 4, and a target coding rate ×[1024]: 921; or
a modulation order: 4, and a target coding rate ×[1024]: 948.

The modulation order 2 indicates that a modulation scheme is QPSK, the modulation order 3 indicates that a modulation scheme is 8PSK, and the modulation order 4 indicates that a modulation scheme is 16PSK.

According to a third aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The method includes: receiving first information, where the first information indicates a modulation and coding scheme MCS of a first signal; and receiving or sending the first signal according to the MCS of the first signal. The MCS of the first signal belongs to a first MCS set, and the first MCS set includes an MCS with constant amplitude and an MCS with non-constant amplitude.

According to this solution, this application provides a set including an MCS with constant amplitude and an MCS with non-constant amplitude. When the MCS set is used in an integrated sensing and communication system, because the MCS with constant amplitude has lower requirements on electromagnetic wave reflection intensity and a signal-to-noise ratio compared with the MCS with non-constant amplitude, the MCS with constant amplitude can be used in a scenario in which channel quality is poor, to improve sensing performance. The MCS with non-constant amplitude can be used in a scenario in which channel quality is good, to improve communication performance while ensuring sensing performance.

In a possible design, the first signal is used for sensing and communication.

In a possible design, the MCS with constant amplitude includes a first MCS. A value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or the value obtained by multiplying the coding rate of the first MCS by 1024 is less than or equal to 901, and the modulation scheme of the first MCS is 16PSK.

In a possible design, the MCS with constant amplitude includes a second MCS, a modulation scheme of the second MCS is 8PSK, and a value obtained by multiplying a coding rate of the second MCS by 1024 is greater than or equal to 620.

In a possible design, the MCS with constant amplitude includes a second MCS, a modulation scheme of the second MCS is 8PSK, and a value obtained by multiplying a coding rate of the second MCS by 1024 is greater than or equal to a first value. The first value is a value obtained by multiplying 1024 by a coding rate at which first spectral efficiency is achieved in an 8PSK modulation scheme in a first signal-to-noise ratio, the first signal-to-noise ratio is a signal-to-noise ratio at a first block error rate, and the first spectral efficiency is spectral efficiency achieved in an MCS with a QPSK modulation scheme in the first signal-to-noise ratio.

In a possible design, the MCS with constant amplitude includes a third MCS, a modulation scheme of the third MCS is 16PSK, and a value obtained by multiplying a coding rate of the third MCS by 1024 is greater than or equal to 710.

In a possible design, the MCS with constant amplitude includes a third MCS, a modulation scheme of the third MCS is 16PSK, and a value obtained by multiplying a coding rate of the third MCS by 1024 is greater than or equal to a second value. The second value is a value obtained by multiplying 1024 by a coding rate at which second spectral efficiency is achieved in a 16PSK modulation scheme in a second signal-to-noise ratio, and the second signal-to-noise ratio is a signal-to-noise ratio at a second block error rate. The second spectral efficiency is greater than third spectral efficiency, and the third spectral efficiency is largest spectral efficiency achieved in an MCS with the 8PSK modulation scheme in the first MCS set at the second BLER.

In a possible design, the MCS with constant amplitude includes a fourth MCS, a modulation scheme of the fourth MCS is QPSK, and a value obtained by multiplying a coding rate of the fourth MCS by 1024 is greater than a threshold. The threshold is a value obtained by multiplying a coding rate of a fifth MCS by 1024, the fifth MCS is an MCS with a QPSK modulation scheme and a highest coding rate in a second MCS set, and the second MCS set includes an MCS with constant amplitude and an MCS with non-constant amplitude.

In a possible design, the MCS with constant amplitude includes a fourth MCS, a modulation scheme of the fourth MCS is QPSK, and a coding rate of the fourth MCS is higher than a coding rate of a fifth MCS. The fifth MCS is an MCS with a QPSK modulation scheme and a highest coding rate in a second MCS set, and the second MCS set includes an MCS with constant amplitude and an MCS with non-constant amplitude.

In a possible design, a modulation scheme of the MCS with constant amplitude includes at least one of the following: binary phase shift keying BPSK, QPSK, 8PSK, or 16PSK.

In a possible design, the MCS with non-constant amplitude includes an MCS with a 64QAM modulation scheme.

For technical effects brought by any possible design of the third aspect, refer to the technical effects brought by corresponding designs of the first aspect. Details are not described herein again.

According to a fourth aspect, a communication method is provided. The method may be performed by a terminal device, or may be performed by a component of the terminal device, such as a processor, a chip, or a chip system of the terminal device, or may be implemented by a logical module or software that can implement all or some functions of the terminal device. The method includes: determining a first channel quality indicator CQI, and sending third information. The third information indicates the first CQI. The first CQI belongs to a first CQI set, and amplitude of a modulation symbol corresponding to a CQI in the first CQI set is constant.

According to this solution, this application provides a CQI set with constant amplitude of a corresponding modulation symbol. When the CQI set is used in an integrated sensing and communication system, a terminal device can determine the first CQI based on the CQI set, and feed back channel quality more accurately, so that the network device adjusts an MCS suitable to transmit a sensing-communication signal, to improve sensing performance and communication performance.

According to a fifth aspect, a communication method is provided. The method may be performed by a network device, or may be performed by a component of the network device, such as a processor, a chip, or a chip system of the network device, or may be implemented by a logical module or software that can implement all or some functions of the network device. The method includes: receiving third information, where the third information indicates a first channel quality indicator CQI; and determining a modulation and coding scheme MCS based on the first CQI. The first CQI belongs to a first CQI set, and amplitude of a modulation symbol corresponding to a CQI in the first CQI set is constant.

For technical effects brought by the fifth aspect, refer to the technical effects brought by the fourth aspect. Details are not described herein again.

According to a sixth aspect, a communication apparatus configured to implement the methods is provided. The communication apparatus may be the terminal device in the first aspect, the third aspect, or the fourth aspect, or an apparatus included in the terminal device, for example, a chip or a chip system; or the communication apparatus may be the network device in the second aspect or the fifth aspect, or an apparatus included in the network device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to the functions.

In some possible designs, the communication apparatus may include a processing module and a transceiver module. The processing module may be configured to implement a processing function in any one of the foregoing aspects and the possible implementations thereof. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver, a transceiver machine, or a communication interface.

According to a seventh aspect, a communication apparatus is provided, including a processor and a memory. The memory is configured to store computer instructions. When the processor executes the instructions, the communication apparatus is enabled to perform the method according to any one of the foregoing aspects. The communication apparatus may be the terminal device in the first aspect, the third aspect, or the fourth aspect, or an apparatus included in the terminal device, for example, a chip or a chip system; or the communication apparatus may be the network device in the second aspect or the fifth aspect, or an apparatus included in the network device, for example, a chip or a chip system.

According to an eighth aspect, a communication apparatus is provided, including a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the terminal device in the first aspect, the third aspect, or the fourth aspect, or an apparatus included in the terminal device, for example, a chip or a chip system; or the communication apparatus may be the network device in the second aspect or the fifth aspect, or an apparatus included in the network device, for example, a chip or a chip system.

According to a ninth aspect, a communication apparatus is provided, including at least one processor. The processor is configured to execute a computer program or instructions stored in a memory, to enable the communication apparatus to perform the method in any one of the foregoing aspects. The memory may be coupled to the processor, or may be independent of the processor. The communication apparatus may be the terminal device in the first aspect, the third aspect, or the fourth aspect, or an apparatus included in the terminal device, for example, a chip or a chip system; or the communication apparatus may be the network device in the second aspect or the fifth aspect, or an apparatus included in the network device, for example, a chip or a chip system.

According to a tenth aspect, a computer-readable storage medium is provided. The computer-readable storage medium stores a computer program or instructions. When the computer program or instructions are run on a communication apparatus, the communication apparatus is enabled to perform the method in any one of the foregoing aspects.

According to an eleventh aspect, a computer program product including instructions is provided. When the computer program product runs on a communication apparatus, the communication apparatus is enabled to perform the method according to any one of the foregoing aspects.

According to a twelfth aspect, a communication apparatus (for example, the communication apparatus may be a chip or a chip system) is provided. The communication apparatus includes a processor, configured to implement the function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the sixth aspect to the twelfth aspect is the chip, a sending action/function of the communication apparatus may be understood as information output, and a receiving action/function of the communication apparatus may be understood as information input.

For technical effects brought by any design manner of the sixth aspect to the twelfth aspect, refer to the technical effects brought by different design manners in the first aspect, the second aspect, the third aspect, the fourth aspect, or the fifth aspect. Details are not described herein again.

## BRIEF DESCRIPTION OF DRAWINGS

FIG. 1 is a diagram of a structure of a communication system according to this application;
FIG. 2 is a diagram of time domain resources occupied by a sensing signal according to this application;
FIG. 3 is a diagram of time domain resources occupied by a communication signal and a sensing-communication signal according to this application;
FIG. 4 is a schematic flowchart of a communication method according to this application;
FIG. 5 is constellation diagrams of QPSK and 64QAM according to this application;
FIG. 6a is a diagram of target detection probabilities in different modulation schemes according to this application;
FIG. 6b is a diagram of power values of noise and interference on a distance spectrum according to this application;
FIG. 7 is a diagram of SNR-BLER when a modulation scheme is QPSK according to this application;
FIG. 8 is a diagram of SNR-BLER when a modulation scheme is 8PSK according to this application;
FIG. 9 is a diagram of SNR-BLER when a modulation scheme is 16PSK according to this application;
FIG. 10 is a diagram of SNR-SE of QPSK and 8PSK at different coding rates according to this application;
FIG. 11 is a diagram of SNR-SE of 8PSK and 16PSK at different coding rates according to this application;
FIG. 12 is a diagram of SNR-BLER of QPSK at different coding rates according to this application;
FIG. 13 is a diagram of SNR-BLER of 8PSK at different coding rates according to this application;
FIG. 14 is a diagram of SNR-BLER of QPSK and 8PSK at different coding rates according to this application;
FIG. 15 is a schematic flowchart of another communication method according to this application;
FIG. 16 is a schematic flowchart of still another communication method according to this application;
FIG. 17 is a schematic flowchart of CQI reporting according to this application;
FIG. 18 is another schematic flowchart of CQI reporting according to this application;
FIG. 19 is a diagram of a structure of a communication apparatus according to this application;
FIG. 20 is a diagram of a structure of another communication apparatus according to this application; and
FIG. 21 is a diagram of a structure of still another communication apparatus according to this application.

## DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit a time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, reference may be made to each other. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application are not intended to limit the protection scope of this application.

For ease of understanding the technical solutions in embodiments of this application, terms and technologies related to this application are first briefly described as follows.

Time domain resource: A time domain resource may be a time resource in time domain. A minimum granularity of the time domain resource may be an orthogonal frequency division multiplexing (orthogonal frequency division multiplexing, OFDM) symbol, a mini-slot (mini-slot), a slot (slot), or the like. For example, one mini-slot may include two or more OFDM symbols, and one slot may include 14 OFDM symbols.

Frequency domain resource: A frequency domain resource may be a frequency resource in frequency domain. A minimum granularity of the frequency domain resource may be a resource element (resource element, RE), a physical resource block (physical resource block, PRB), a resource block group (resource block group, RBG), or the like. For example, one PRB may include 12 REs, and one RBG may include 2, 4, 8, or 16 PRBs.

Sensing signal: An electromagnetic wave signal, which may include a sensing signal used to sense only a sensed target (or referred to as a target object), and a sensing signal used to sense the sensed target and used for communication. The sensing signal used to sense the sensed target and used for communication may be referred to as a sensing-communication signal. That is, the sensing-communication signal may be used for sensing and communication. That is, the sensing-communication signal may carry communication data.

In this application, the sensing-communication signal may alternatively be referred to as a radar signal, a sounding signal, a radar sensing signal, a radar sounding signal, an environment sensing signal, or the like. For example, sensing may be understood as determining an attribute of the sensed target, and the attribute may include, for example, a speed, a shape size, a location, and a type.

Echo signal: After an electromagnetic wave reaches a sensed target, a signal reflected by the sensed target is an echo signal.

Communication signal: an electromagnetic wave signal used for communication or data transmission.

Transport block (transport block, TB): A TB is a payload (payload) at a physical layer. A physical downlink shared channel (physical downlink shared channel, PDSCH) may transmit data in a unit of TB.

Modulation and coding scheme (modulation and coding scheme, MCS): An MCS defines a quantity of valid bits that can be carried by a resource element (resource element, RE).

Usually, an MCS table may be defined. The MCS table includes at least one of the following content: a modulation scheme (modulation), a coding rate (coding rate, CR), spectral efficiency (spectral efficiency, SE), or the like. One MCS table may include at least one type of modulation and coding scheme information. Each type of modulation and coding scheme information corresponds to an index (that is, a modulation and coding scheme index (index)), and each type of modulation and coding scheme information (or a modulation and coding scheme index) corresponds to at least one of the following content: a modulation scheme, a coding rate, or spectral efficiency. It should be noted that, in this application, the index may also be understood as a number, and the index and the number may be replaced with each other.

A downlink data signal is used as an example. Common modulation schemes include quadrature phase shift keying (quadrature phase shift keying, QPSK), 16 quadrature amplitude modulation (quadrature amplitude modulation, QAM), 64QAM, and 256QAM. In the QPSK scheme, each RE can carry 2-bit (bit) information. In the 16QAM scheme, each RE can carry 4-bit information. In the 64QAM scheme, each RE can carry 6-bit information. In the 256QAM scheme, each RE can carry 8-bit information.

The coding rate may be understood as a ratio of useful bits of a transmitted signal to total transmitted bits (useful bits+redundant bits). The redundant bits are used for forward error correction. A lower coding rate indicates more redundant bits.

NR defines three MCS tables for a physical downlink shared channel (physical downlink shared channel, PDSCH): a 64QAM table, a 256QAM table, and a 64QAM table with low spectral efficiency. Different MCS tables are applicable to different scenarios. For example, if a network device or a terminal device does not support the 256QAM modulation scheme and channel quality is poor, the 64QAM table may be used. If channel quality is good and the network device or the terminal device supports 256QAM, the 256QAM table may be used. If high-reliability data needs to be transmitted, for example, an ultra-reliable low-latency communication (ultra-reliable low-latency communication, URLLC) service, the 64QAM table with low spectral efficiency may be used. The 64QAM table with low spectral efficiency improves channel reliability by reducing a coding rate and adding redundancy. Therefore, the spectral efficiency is low.

For example, Table 1 shows an MCS table 1 defined in the 3GPP protocol, that is, the 64QAM table. Table 2 shows an MCS table 2 defined in the 3GPP protocol, that is, the 256QAM table. Table 3 shows an MCS table 3 defined in the 3GPP protocol, that is, the 64QAM table with low spectral efficiency.

The first column in the MCS table represents an MCS index, and values of the MCS indexes are 0 to 31 and represent a total of 32 MCS options. The second column in the MCS table represents a modulation order, and the modulation order indicates a modulation scheme. $Q_m = 2$ indicates that the modulation scheme is QPSK, $Q_m = 4$ indicates that the modulation scheme is 16QAM, $Q_m = 6$ indicates that the modulation scheme is 64QAM, and $Q_m = 8$ indicates that the modulation scheme is 256QAM. The third column in the MCS table represents a target coding rate, and indicates a coding rate expected to be achieved after a modulation scheme and a corresponding redundancy degree of a current row are selected. The last column in the MCS table indicates spectral efficiency of an MCS in a current row.

**Table 1**

| MCS index $I_{MCS}$ | Modulation order (Modulation order) $Q_m$ | Target coding rate (Target code rate) $R \times [1024]$ | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |

(continued)

| MCS index $I_{MCS}$ | Modulation order (Modulation order)$Q_m$ | Target coding rate (Target code rate) $R \times [1024]$ | Spectral efficiency (Spectral efficiency) |
|---|---|---|---|
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved (reserved) | |
| 31 | 6 | Reserved (reserved) | |

**Table 2**

| MCS index $I_{MCS}$ | Modulation order (Modulation order)$Q_m$ | Target coding rate (Target code rate) $R \times [1024]$ | Spectral efficiency (Spectral efficiency) |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |

(continued)

| MCS index $I_{MCS}$ | Modulation order (Modulation order)$Q_m$ | Target coding rate (Target code rate) $R\times[1024]$ | Spectral efficiency (Spectral efficiency) |
|---|---|---|---|
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved (reserved) | |
| 29 | 4 | Reserved (reserved) | |
| 30 | 6 | Reserved (reserved) | |
| 31 | 8 | Reserved (reserved) | |

**Table 3**

| MCS index $I_{MCS}$ | Modulation order (Modulation order)$Q_m$ | Target coding rate (Target code rate) $R\times[1024]$ | Spectral efficiency (Spectral efficiency) |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |

(continued)

| MCS index $I_{MCS}$ | Modulation order (Modulation order) $Q_m$ | Target coding rate (Target code rate) $R \times [1024]$ | Spectral efficiency (Spectral efficiency) |
|---|---|---|---|
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved (reserved) | |
| 30 | 4 | Reserved (reserved) | |
| 31 | 6 | Reserved (reserved) | |

It can be learned from Table 1, Table 2, and Table 3 that when modulation orders are the same, target coding rates are in direct proportion to spectral efficiency, and a higher target coding rate indicates higher spectral efficiency.

The network device may indicate, to the terminal device through radio resource control (radio resource control, RRC) signaling or physical layer signaling, an MCS table selected by the network device. Further, the network device may determine, according to a link adaptation algorithm or the like, the MCS used by the network device, and then indicate, to the terminal device by using downlink control information (downlink control indicator, DCI), the MCS used by the network device. The terminal device may receive downlink data and demodulate the data according to the MCS indicated by the network device.

For example, the MCS is selected depending on quality of a radio link. Better link quality indicates a higher index of the selected MCS, and more useful bits that can be carried by one RE. Poorer link quality indicates a lower index of the selected MCS, and fewer useful bits that can be carried by one RE.

Channel quality indicator (channel quality indicator, CQI):

A CQI mainly reflects channel quality. A terminal device may determine the CQI by measuring a channel state information reference signal (channel state information reference signal, CSI-RS), and feed back the CQI determined by the terminal device to a network device. The network device may adjust an MCS and a transport block size (transport block size, TBS) based on the CQI reported by the terminal device.

Similar to the MCS table, a CQI table may also be defined. The CQI table includes at least one of the following content: a modulation scheme, a coding rate, or spectral efficiency. One CQI table may include at least one type of (or one) CQI, each CQI corresponds to an index (that is, a CQI index), and each CQI (or CQI index) corresponds to at least one of the following content: a modulation scheme, a coding rate, or spectral efficiency. For example, a CQI table defined in the protocol may be shown in Table 4.

**Table 4**

| CQI index (index) | Modulation scheme (modulation) | Coding rate (code rate) ×1024 | Efficiency (efficiency) |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Radar is widely used in air and ground traffic monitoring, meteorological detection, security monitoring, electromagnetic imaging, and the like. For example, in ground traffic monitoring, radar may be used to detect a vehicle speed, and monitor emergency lane occupation and an illegal lane change. Radar may be used for uncrewed aerial vehicle detection in air detection. With the increasing demand for detection, an area that needs to be detected is expanding. If only radar is used for detection in a wide coverage area, costs of radar devices are increased. In addition, in a case of continuous coverage, interference between radar devices is large, and the demand for detection may not be met.

However, a wireless communication system has abundant spectrum resources, and has advantages of a large deployment scale and wide coverage. Therefore, it is an important trend to integrate radar detection and wireless network communication based on advantages thereof. Generally, a system that integrates communication and sensing functions is referred to as an integrated sensing and communication system. The integrated sensing and communication design has the following advantages: Communication and radar functions can share hardware, to reduce hardware costs. The sensing function can be directly deployed on an existing site, to facilitate deployment. A large bandwidth of a communication spectrum can be used to achieve high detection precision. Collaborative networking is facilitated. A sensing result is used to assist communication, to improve communication quality.

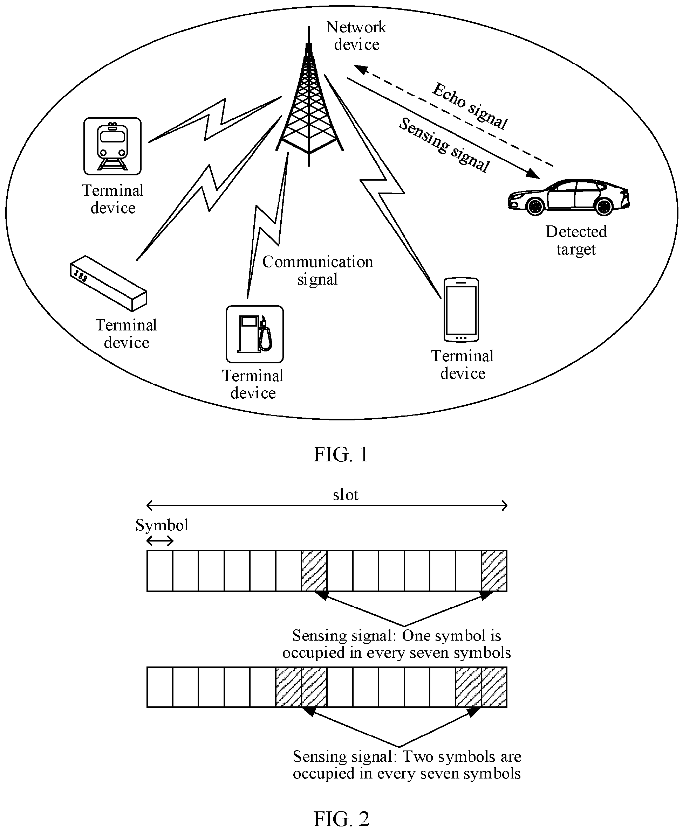

For example, FIG. 1 is a diagram of a structure of an integrated sensing and communication system according to this application. The system integrates a communication function and a sensing function. The communication system includes a network device and at least one terminal device.

Further, the system may include a sensed target. The sensed target may be various tangible objects that can reflect an electromagnetic wave, for example, a ground object such as a mountain, a forest, or a building, or may include a movable object such as a vehicle, an uncrewed aerial vehicle, a pedestrian, or a terminal device. The sensed target may also be referred to as a detected target, a sensed object, a detected object, a sensed device, or the like. This is not specifically limited in this application.

Optionally, the network device may send a downlink communication signal to the terminal device, or the terminal device may send an uplink communication signal to the network device. In addition, the network device may further send a sensing signal, and receive an echo signal, of the sensing signal, reflected by the sensed target, to estimate a speed, a distance, an angle, a moving track, a shape or size, and the like of the sensed target.

Optionally, the integrated sensing and communication system shown in FIG. 1 may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle to everything (vehicle to everything, V2X) system, an LTE-NR hybrid networking system, a device-to-device (device-to-device, D2D) system, a machine to machine (machine to machine, M2M) communication system, an internet of things (Internet of Things, IoT), another next-generation communication system, or the like.

Optionally, the network device in this application is a network side device having a wireless transceiver function. For example, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in an NR system; or may be a transmission reception point (transmission reception point, TRP) or a 3rd generation partnership project (3rd generation partnership project, 3GPP) evolved NodeB; or may be an access point (access point, AP) in a Wi-Fi system; or may be a wireless relay node or a wireless backhaul node; or may be a device that implements a base station function in IoT, V2X, D2D, or M2M, for example, a roadside unit (roadside unit, RSU) in V2X.

Optionally, the terminal device may be a user-side device that has a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device may be deployed on land, including an indoor or outdoor terminal device, a handheld or vehicle-mounted terminal device; or may be deployed on water (for example, on a ship); or may be deployed in the air (for example, on an aircraft, a balloon, or a satellite).

For example, the terminal device may be an uncrewed aerial vehicle (uncrewed aerial vehicle, UAV), an IoT device (for example, a sensor, an electricity meter, or a water meter), a V2X device, a station (station, ST) in a wireless local area network (wireless local area networks, WLAN), a cellular phone, a cordless phone, a session start protocol (session initiation protocol, SIP) phone, a wireless local loop (wireless local loop, WLL) station, a personal digital assistant (personal digital assistant, PDA) device, a handheld device with a wireless communication function, a computing device, or another processing device connected to a wireless modem, a vehicle-mounted device, a wearable device (which may alternatively be referred to as a smart wearable device), a tablet computer or a computer with a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), an in-vehicle terminal, a vehicle with a vehicle-to-vehicle (vehicle-to-vehicle, V2V) communication capability, an intelligent connected vehicle, an uncrewed aerial vehicle with an uncrewed aerial vehicle to uncrewed aerial vehicle (UAV to UAV, U2U) communication capability, or a wireless apparatus (for example, a communication module, a modem, a chip, or a chip system) built in the foregoing devices. The terminal may be mobile or fixed. This is not specifically limited in this application.

It should be noted that the communication system and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a network architecture evolves and a new service scenario emerges.

In the integrated sensing and communication system, when a sensing signal does not carry communication data and is used only for sensing, a sensing system occupies large resource overheads, and transmission performance of a communication system may be reduced. For example, as shown in FIG. 2, for one slot, one OFDM symbol in every seven OFDM symbols may be occupied to send a sensing signal used only for sensing, or two OFDM symbols in every seven symbols are occupied to send a sensing signal used only for sensing. In the two resource usage manners shown in FIG. 2, the sensing signal used only for sensing occupies large resource overheads.

For example, the sensing signal used only for sensing may be a CSI-RS, a demodulation reference signal (demodulation reference signal, DMRS), or a signal independently used for sounding, such as a ZC sequence or a Gold sequence.

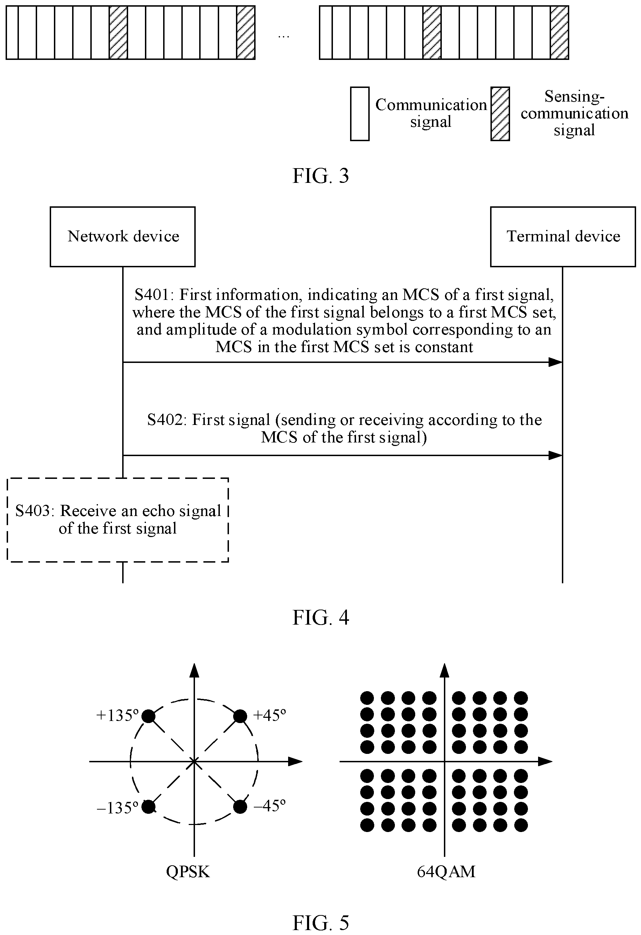

To reduce resource overheads caused by the sensing system and further improve communication performance while ensuring sensing performance, a sensing signal used for sensing and communication may be sent. That is, a sensing-communication signal is sent. For example, as shown in FIG. 3, the sensing-communication signal may be sent on a plurality of OFDM symbols, and the plurality of OFDM symbols carrying the sensing-communication signal may be aggregated into one communication slot, to reduce a loss of communication performance.

It should be noted that, when sending the sensing-communication signal, the network device needs to schedule a resource occupied by the sensing-communication signal. For example, when the sensing-communication signal is sent by the network device, a scheduling procedure similar to that of a PDSCH may be used. When the sensing-communication signal is sent by the terminal device, a scheduling procedure similar to that of a physical uplink shared channel (physical uplink shared channel, PUSCH) may be used.

In addition, because the sensing-communication signal carries communication data, the sensing-communication signal needs to be received and sent according to an MCS. However, the MCS table defined in the existing protocol may not be applicable. Therefore, this application provides a communication method, to design a proper MCS table for the sensing-communication signal.

It may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all the operations in embodiments of this application may be necessarily performed.

It should be noted that, in the following embodiments of this application, names of devices, names of messages between devices, or names of parameters in messages are merely examples, and the messages or the parameters may have other names in specific implementations. This is not specifically limited in embodiments of this application.

FIG. 4 shows a communication method according to this application. The communication method includes the following steps.

S401: A network device sends first information to a terminal device. Correspondingly, the terminal device receives the first information from the network device.

The first information indicates an MCS of a first signal. Optionally, the first signal is used for sensing and communication, or the first signal is a sensing-communication signal. Certainly, the first signal may also be a communication signal or the like. This is not specifically limited in this application.

The MCS of the first signal belongs to a first MCS set. It should be noted that the MCS set in this application may alternatively be understood as an MCS table, or the MCS set includes all MCSs in an MCS table. In addition, the MCS set in this application may alternatively be described as an MCS group, an MCS table, or the like.

Amplitude of a modulation symbol corresponding to an MCS in the first MCS set is constant. When the first MCS set is understood as an MCS table, amplitude of modulation symbols corresponding to all MCSs included in the entire MCS table is constant. For example, a modulation symbol corresponding to an MCS may be understood as a modulation symbol (a complex number) of a modulation scheme of the MCS, or the modulation symbol corresponding to the MCS may be understood as a constellation point in a constellation diagram of the modulation scheme of the MCS. After a plurality of data bits are modulated in a modulation scheme, a plurality of modulation symbols may be obtained, and the plurality of modulation symbols may be referred to as a sequence generated in the modulation scheme.

Optionally, an MCS that corresponds to a modulation symbol with constant amplitude may be referred to as a constant modulus MCS or an MCS with constant amplitude. Correspondingly, an MCS that corresponds to a modulation symbol with non-constant amplitude may be referred to as a non-constant modulus MCS or an MCS with non-constant amplitude. The "amplitude" in this application may also be understood as a "modular value", and the "amplitude" and the "modular value" may be interchanged.

For example, FIG. 5 shows examples of constellation diagrams of QPSK and 64QAM. The constellation diagram includes a horizontal axis, a vertical axis, and constellation points (or may be described as a modulation symbol). For example, a black point in the constellation diagrams shown in FIG. 5 represents a constellation point. A projection of the constellation point on the horizontal axis represents peak amplitude of an in-phase component, and a projection of the constellation point on the vertical axis represents peak amplitude of a quadrature component. A length of a line (or referred to as a vector) connecting a constellation point and an origin point represents amplitude of a modulation symbol, and an angle between the connection line and the horizontal axis represents a phase.

Refer to FIG. 5. For QPSK, one constellation point represents 2-bit information. For example, in the phase, "+45°" represents "00", "-45°" represents "11", "+135°" represents "10", and "-135°" represents "01". In addition, lengths of lines from constellation points of QPSK to an origin point are equal. Therefore, QPSK is a constant modulus MCS, or an MCS with constant amplitude, or amplitude of a modulation symbol corresponding to QPSK is constant, or amplitude of a sequence generated in a QPSK modulation scheme is constant. For 64QAM, one constellation point represents 6-bit information, and in the constellation diagram of 64QAM, lengths of lines from some constellation points to an origin point are different. Therefore, 64QAM is a non-constant modulus MCS, or an MCS with non-constant amplitude, or amplitude of a modulation symbol corresponding to 64QAM is not constant, or amplitude of a sequence generated in the 64QAM modulation scheme is not constant.

Optionally, a modulation scheme of the MCS in the first MCS set may be phase shift keying (phase shift keying, PSK). For example, the modulation scheme may include at least one of the following: binary phase shift keying (binary phase shift keying, BPSK), QPSK, 8 phase shift keying (8 phase shift keying, 8PSK), or 16 phase shift keying (16 phase shift keying, 16PSK). For example, modulation schemes of MCSs in the first MCS set may be one of the following combinations: BPSK+QPSK, BPSK+QPSK+8PSK, BPSK+QPSK+8PSK+16PSK, QPSK+8PSK, QPSK+8PSK+16PSK, or 8PSK+16PSK.

Optionally, the first information may include an index of the MCS of the first signal in the first MCS set. Based on this, compared with carrying the MCS in the first information, indicating the MCS by using the MCS index can reduce signaling overheads.

S402: A first communication device sends the first signal according to the MCS of the first signal. Correspondingly, a second communication device receives the first signal according to the MCS of the first signal.

Optionally, the first communication device may be the network device, and correspondingly, the second communication device is the terminal device. That is, the first signal may be a downlink signal. Alternatively, the first communication device may be the terminal device, and correspondingly, the second communication device may be the network device. That is, the first signal may be an uplink signal. Alternatively, the first communication device may be a first terminal device, and correspondingly, the second communication device may be a second terminal device. That is, the first signal may be a signal on a sidelink (sidelink, SL). In FIG. 4, an example in which the first communication device is the network device and the second communication device is the terminal device is used for description.

Optionally, that the second communication device receives the first signal according to the MCS of the first signal may include: The second communication device demodulates and decodes the first signal according to the MCS of the first signal, to obtain communication data carried in the first signal. Subsequently, the second communication device may perform corresponding processing based on the communication data. This is not specifically limited in this application.

Optionally, when the first signal is used for sensing and communication, assuming that the first signal occupies one OFDM symbol in time domain, the first communication device may repeatedly send the first signal on the OFDM used to carry the sensing-communication signal. That is, data information carried in the first signal can be repeatedly transmitted. Compared with sensing performed by using random data information, this can reduce impact of interference between neighboring network devices on target detection, and can improve sensing performance.

Optionally, when the first signal is used for sensing and communication, the communication method may further include the following step:

S403: The first communication device receives an echo signal of the first signal.

Optionally, the echo signal of the first signal may be formed after the first signal is reflected by the second communication device, or may be formed after the first signal is reflected by another sensed target around the second communication device. This is not specifically limited in this application.

Optionally, after receiving the echo signal of the first signal, the first communication device may perform sensing processing on the echo signal, to sense the sensed target, and estimate a speed, a distance, an angle, a moving track, a shape or size, and the like of the sensed target.

Optionally, the first communication device may use a sensing result to assist in communication, and the like. For example, when the first communication device is the network device, the network device may use the sensing result to assist in beam management. For example, a beam direction of the network device may be directed to the sensed target based on a location of the sensed target, to reduce beam scanning overheads.

According to this solution, in an integrated sensing and communication scenario, target detection performance during modulation of a sensing-communication signal in an MCS with constant amplitude in the first MCS set is better than target detection performance during modulation of a sensing-communication signal in an MCS with non-constant amplitude. Therefore, when the first signal is a sensing-communication signal, the solution in this application can improve sensing performance while improving resource utilization.

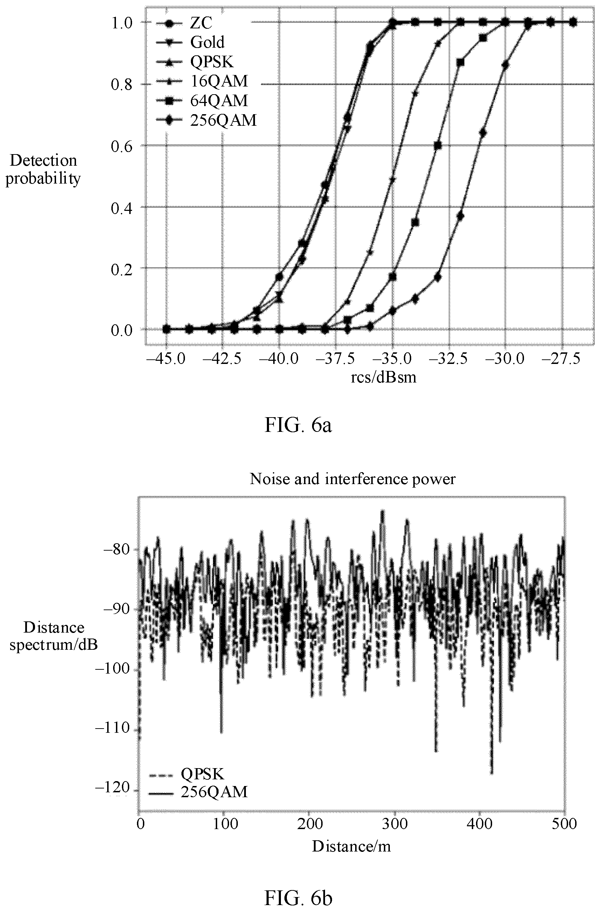

For example, FIG. 6a shows detection probability curves of a sensed target when signals are sent in different modulation schemes in a same sensing scenario. A vertical axis represents a detection probability. A horizontal axis represents a radar cross section (radar cross section, RCS), in a unit of decibel per square meter (dBsm), and indicates reflection intensity of an object to an electromagnetic wave. It can be learned from FIG. 6a that, with a same detection probability, an RCS detected in QPSK is about 2 dBsm to 3 dBsm less than an RCS detected in 16QAM, is about 4 dB to 5 dB less than an RCS detected in 64QAM, and is about 6 dB to 7 dB less than an RCS detected in 256QAM. That is, to achieve a same detection probability, compared with QPSK, 16QAM, 64QAM, and 256QAM modulation requires a larger RCS of a sensed target. In other words, for a same RCS of a sensed target, a detection probability during QPSK modulation is higher than a detection probability during QAM modulation. In addition, it can be further learned from FIG. 6a that a detection probability during QPSK modulation is close to a detection probability when sensing is performed according to a ZC sequence, a Gold sequence, or the like.

For example, FIG. 6b indicates a distance spectrum chart corresponding to noise and interference when a sensing-communication signal is modulated in a QPSK modulation scheme and a 256QAM modulation scheme. A vertical axis indicates a power value of noise and interference in the distance spectrum, in a unit of dB. A horizontal axis indicates a distance, in a unit of meter (m). It can be learned from FIG. 6b that, a power value of noise and interference during 256QAM modulation is greater than a power value of noise and interference during QPSK modulation. An average power value of noise and interference corresponding to the QPSK modulation scheme is about -88.05 dB, and an average power value of noise and interference corresponding to the 256QAM modulation scheme is about -82.91 dB. That is, compared with a modulation scheme with constant amplitude, such as QPSK, a modulation scheme with non-constant amplitude, such as 16QAM, 64QAM, and 256QAM amplifies noise and interference power. Therefore, with reference to FIG. 6a and FIG. 6b, it can be learned that, for a same detection probability requirement, a target RCS that can be sensed in a modulation scheme with non-constant amplitude is larger. In other words, compared with a modulation scheme with constant amplitude, a modulation scheme with non-constant amplitude requires higher transmit power, to achieve a same detection probability.

According to the foregoing description, FIG. 6a and FIG. 6b can verify that target detection performance during modulation in an MCS with constant amplitude is better than target detection performance during modulation in an MCS with non-constant amplitude. Therefore, the solution of this application can improve sensing performance while improving resource utilization and ensuring communication performance.

The foregoing describes a procedure of the communication method provided in this application. The following further describes the first MCS set and the MCS in the first MCS set.

In some embodiments, the first MCS set includes a first MCS. In a possible implementation, a value obtained by multiplying a coding rate of the first MCS by 1024 is less than or equal to 948, and a modulation scheme of the first MCS is QPSK or 8PSK. In other words, a value obtained by multiplying a coding rate of an MCS with a QPSK or 8PSK modulation scheme in the first MCS set by 1024 may reach 948.

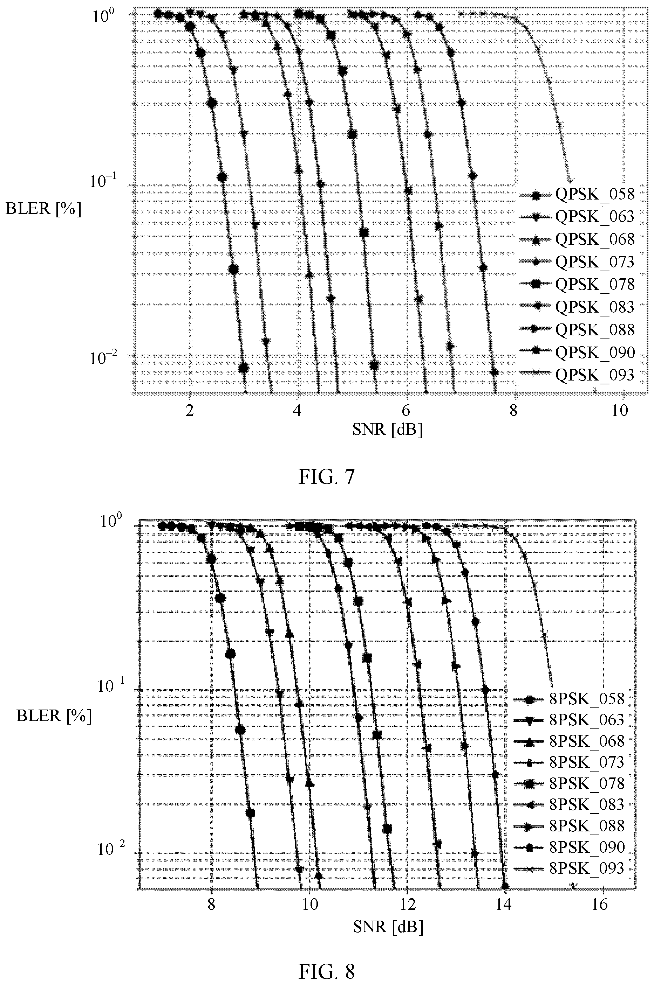

For example, FIG. 7 shows an SNR-block error rate (block error rate, BLER) chart when a plurality of coding rates are selected at an interval of 0.05 when a modulation scheme is QPSK. It can be learned from FIG. 7 that, for an MCS configuration in which a modulation scheme is QPSK and a coding rate is 0.93, when a BLER is 10%, an SNR value is approximately 9.2 dB. It should be noted that, based on a plurality of factors considered in an MCS design, when the coding rate is 0.93, a value obtained by multiplying the coding rate by 1024 is defined as 948.

For an MCS whose index is 28 (that is, a modulation scheme is 64QAM and a coding rate is 0.93) in Table 1, when a BLER is 10%, an SNR value is approximately 20 dB. For an MCS whose index is 27 (that is, a modulation scheme is 256QAM and a coding rate is 0.93) in Table 2, when a BLER is 10%, an SNR value is approximately 25.3 dB. In other words, the SNR value of the MCS configuration QPSK-0.93 when the BLER is 10% is less than the SNR values of 64QAM-0.93 and 256QAM-0.93 when the BLER is 10%. That is, the MCS configuration QPSK-0.93 meets an SNR value range corresponding to Table 1 and Table 2. Therefore, the MCS configuration QPSK-0.93 is feasible.

"QPSK-0.93" indicates that a modulation scheme is QPSK and a coding rate is 0.93. For ease of description of different MCS configurations in this specification, a description manner of "modulation scheme-coding rate" indicates a possible MCS configuration. For example, "64QAM-0.93" indicates that a modulation scheme is 64QAM and a coding rate is 0.93.

For example, FIG. 8 shows an SNR-BLER chart when a plurality of coding rates are selected at an interval of 0.05 when a modulation scheme is 8PSK. It can be learned from FIG. 8 that, for a configuration in which a modulation scheme is 8PSK and a coding rate is 0.93, when a BLER is 10%, an SNR value is approximately 14.95 dB. In other words, the SNR value of the configuration 8PSK-0.93 when the BLER is 10% is less than the SNR values of 64QAM-0.93 and 256QAM-0.93 when the BLER is 10%. That is, the configuration 8PSK-0.93 meets an SNR value range corresponding to Table 1 and Table 2. Therefore, the configuration 8PSK-0.93 is feasible.

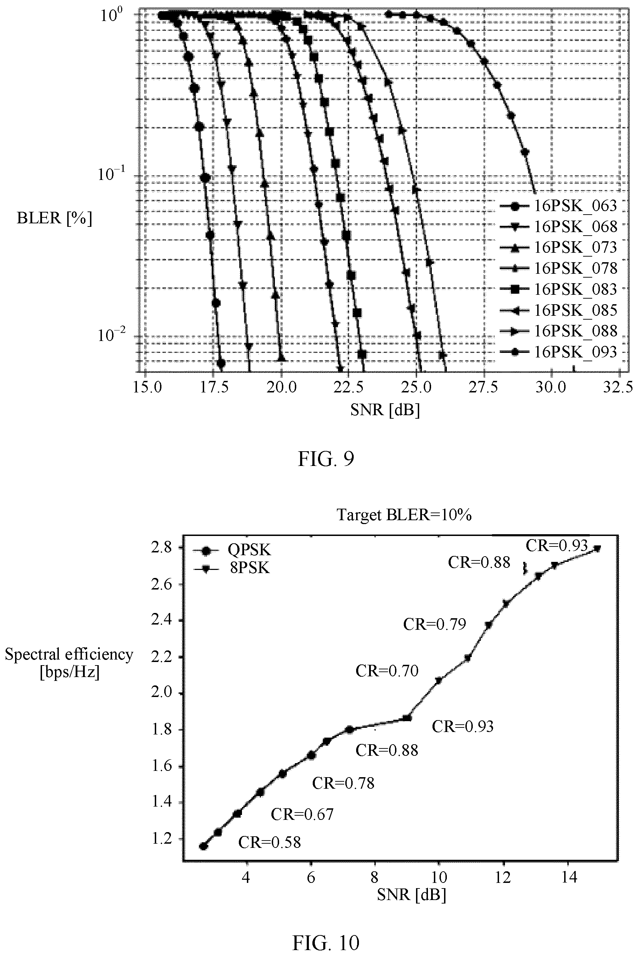

For example, FIG. 9 shows an SNR-BLER chart when a plurality of coding rates are selected at an interval of 0.05 when a modulation scheme is 16PSK. It can be learned from FIG. 9 that, for a configuration in which a modulation scheme is 16PSK and a coding rate is 0.93, when a BLER is 10%, an SNR value is approximately 29.2 dB, which is higher than an SNR value of a configuration of a highest modulation order and a highest coding rate in Table 1 and Table 2 when the BLER is 10%. Therefore, for a configuration of a highest coding rate corresponding to 16PSK:

In a possible implementation, the SNR value range in Table 1 and Table 2 are still used, a highest coding rate corresponding to 16PSK is reduced to approximately 0.88, and a value obtained by multiplying the highest coding rate by 1024 is defined as 901. In other words, a value obtained by multiplying a coding rate of an MCS with a 16PSK modulation scheme in the first MCS set by 1024 may reach 901.

In another possible implementation, an SNR value range of the MCS set is expanded, a highest coding rate corresponding to 16PSK is set to 0.93, and a value obtained by multiplying the highest coding rate by 1024 is defined as 948. In other words, a value obtained by multiplying a coding rate of an MCS with a 16PSK modulation scheme in the first MCS set by 1024 may reach 948. Based on this, in a scenario of good channel quality, data may be transmitted at a high coding rate, to improve communication efficiency.

In some embodiments, the first MCS set includes a second MCS, a modulation scheme of the second MCS is 8PSK, and a value obtained by multiplying a coding rate of the second MCS by 1024 is greater than or equal to a first value. For example, the first value may be 620. That is, the value obtained by multiplying the coding rate of the second MCS by 1024 is greater than or equal to 620.

Optionally, the first value may be a value obtained by multiplying 1024 by a coding rate at which first spectral efficiency is achieved in the 8PSK modulation scheme in the first SNR.

Optionally, the first SNR is a signal-to-noise ratio at a first BLER. For example, the first BLER may be equal to 10%.

Optionally, the first spectral efficiency may be spectral efficiency achieved in an MCS with a QPSK modulation scheme in the first SNR. That is, the first spectral efficiency may be an intersection point of spectral efficiency achieved in QPSK and 8PSK at different coding rates.

For example, the first BLER is equal to 10%. FIG. 10 shows SNR-SE curves of QPSK and 8PSK at different coding rates. It can be learned from FIG. 10 that an intersection point of spectral efficiency of QPSK and 8PSK is approximately 1.85 bps/Hz. That is, the first spectral efficiency may be 1.85 bps/Hz, where bps refers to bits per second (bits per second, bps), and Hz refers to hertz (hertz, Hz). In addition, at the intersection point of spectral efficiency, a coding rate corresponding to QPSK is 0.93, and a coding rate corresponding to 8PSK is approximately 0.61. Based on this, a value obtained by multiplying a lowest coding rate corresponding to 8PSK in the first MCS set by 1024 may be determined as a value greater than or equal to 620.

In some embodiments, the first MCS set includes a third MCS, a modulation scheme of the third MCS is 16PSK, and a value obtained by multiplying a coding rate of the third MCS by 1024 is greater than or equal to a second value. For example, the second value may be 710. That is, the value obtained by multiplying the coding rate of the third MCS by 1024 is greater than or equal to 710.

Optionally, the second value may be a value obtained by multiplying 1024 by a coding rate at which second spectral efficiency is achieved in the 16PSK modulation scheme in the second SNR.

Optionally, the second SNR is a signal-to-noise ratio at a second BLER. For example, the second BLER may be equal to 10%. Certainly, the second BLER may alternatively be equal to another value. This is not specifically limited in this application.

Optionally, the second spectral efficiency is greater than third spectral efficiency, and the third spectral efficiency is largest spectral efficiency achieved in an MCS with the 8PSK modulation scheme in the first MCS set at the second BLER. That is, at the second BLER, spectral efficiency achieved at a lowest coding rate corresponding to 16PSK in the first MCS set is greater than largest spectral efficiency achieved in 8PSK in the first MCS set.

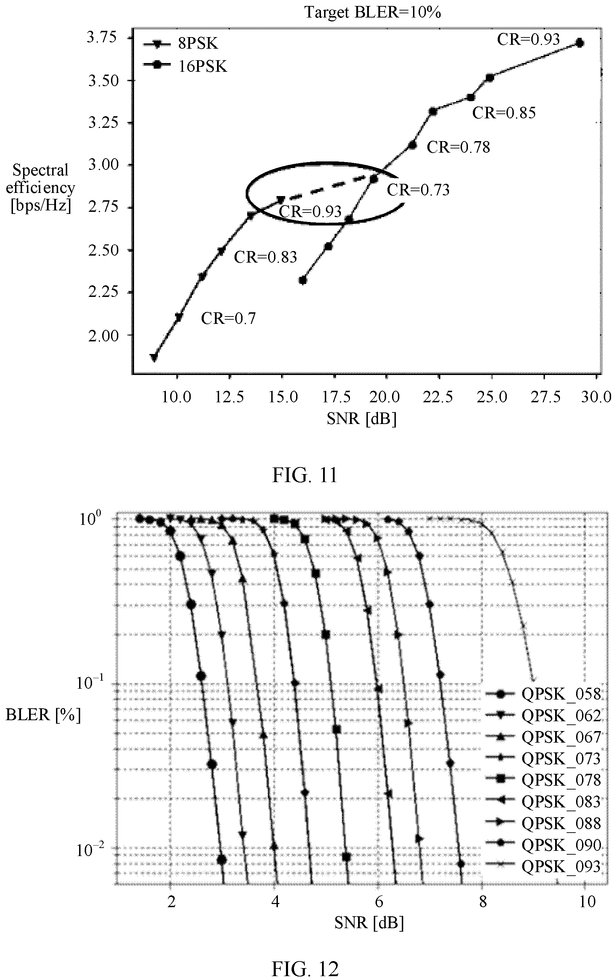

For example, the second BLER is equal to 10%. FIG. 11 shows SNR-SE curves of 8PSK and 16PSK at different coding rates. It can be learned from FIG. 11 that the SNR-SE curves of 8PSK and 16PSK have no intersection point. To meet a requirement that spectral efficiency in the MCS table increases linearly, the SNR-SE curve of 8PSK may be extended (a dashed line part in FIG. 11), to obtain a virtual intersection point (SE is approximately 2.78 bps/Hz) of spectral efficiency of 8PSK and 16PSK. At this intersection point, a coding rate corresponding to 16PSK is approximately 0.7. Based on this, a value obtained by multiplying a lowest coding rate corresponding to 16PSK in the first MCS set by 1024 may be determined as a value greater than or equal to 710.

In some embodiments, the first MCS set includes a fourth MCS, a modulation scheme of the fourth MCS is QPSK, a value obtained by multiplying a coding rate of the fourth MCS by 1024 is greater than a threshold, and the threshold is a value obtained by multiplying a coding rate of the fifth MCS by 1024. In other words, the coding rate of the fourth MCS is greater than the coding rate of the fifth MCS. The fifth MCS is an MCS with a QPSK modulation scheme and a highest coding rate in a second MCS set, and the fifth MCS set includes an MCS with constant amplitude and an MCS with non-constant amplitude.

For example, the second MCS set may be the MCS table shown in Table 1, Table 2, or Table 3. When the second MCS set is the MCS table shown in Table 1, the fifth MCS may be an MCS whose index is 9 in Table 1, and a value obtained by multiplying the coding rate of the fifth MCS by 1024 is 679. That is, a value obtained by multiplying the coding rate of the fourth MCS by 1024 is greater than 679. When the second MCS set is the MCS table shown in Table 2 or Table 3, the fifth MCS may be an MCS whose index is 4 in Table 2, or an MCS whose index is 14 in Table 3. A value obtained by multiplying the coding rate of the fifth MCS by 1024 is 602. That is, a value obtained by multiplying the coding rate of the fourth MCS by 1024 is greater than 602.

According to this solution, the first MCS set includes an MCS with a QPSK modulation scheme and a high coding rate. In a scenario in which channel quality is good, the fourth MCS may be used to transmit a sensing-communication signal, to improve a coding rate to transmit a larger amount of data, and further improve communication performance. In addition, in a scenario in which sensing is performed by repeatedly transmitting data information, because repeat transmission can improve transmission reliability of the data information, a high coding rate may be used to improve communication performance.

The foregoing describes features of the MCS in the first MCS set. The following provides several examples of MCSs that may be included in the first MCS set.

In a possible implementation, the first MCS set may include at least one of the following MCSs. A modulation order 2 indicates that a modulation scheme is QPSK, and a modulation order 3 indicates that a modulation scheme is 8PSK.

A modulation order is 2, and a target coding rate ×[1024] is 719. Optionally, corresponding spectral efficiency may be 1.4043.

A modulation order is 2, and a target coding rate ×[1024] is 772. Optionally, corresponding spectral efficiency may be 1.5078.

A modulation order is 2, and a target coding rate ×[1024] is 841. Optionally, corresponding spectral efficiency may be 1.6426.

A modulation order is 2, and a target coding rate ×[1024] is 910. Optionally, corresponding spectral efficiency may be 1.7773.

A modulation order is 2, and a target coding rate ×[1024] is 948. Optionally, corresponding spectral efficiency may be 1.8516.

A modulation order is 3, and a target coding rate ×[1024] is 666. Optionally, corresponding spectral efficiency may be 1.9512.

A modulation order is 3, and a target coding rate ×[1024] is 719. Optionally, corresponding spectral efficiency may be 2.1064.

A modulation order is 3, and a target coding rate ×[1024] is 772. Optionally, corresponding spectral efficiency may be 2.2617.

A modulation order is 3, and a target coding rate ×[1024] is 822. Optionally, corresponding spectral efficiency may be 2.4082.

A modulation order is 3, and a target coding rate ×[1024] is 873. Optionally, corresponding spectral efficiency may be 2.5576.

A modulation order is 3, and a target coding rate ×[1024] is 910. Optionally, corresponding spectral efficiency may be 2.6660.

A modulation order is 3, and a target coding rate ×[1024] is 948. Optionally, corresponding spectral efficiency may be 2.7773.

It should be noted that one row in the foregoing example may represent one MCS. For example, the first row may represent an MCS whose modulation order is 2 and whose target coding rate ×[1024] is 719. In addition, spectral efficiency of the MCS may be 1.4043. Certainly, the spectral efficiency of the MCS may alternatively be another value, and the spectral efficiency of the MCS provided in this embodiment of this application is not specifically limited.

Optionally, in addition to the MCSs in the foregoing example, the first MCS set may further include another MCS that corresponds to a modulation symbol with constant amplitude. For example, the first MCS set may further include some or all MCSs whose modulation orders are 2 shown in Table 1 to Table 3. Based on this, when the MCS table represents the first MCS set, X entries may be deleted from the original MCS table, and then X entries are added, where X is a positive integer. The original MCS table may be an MCS table defined in the existing protocol, for example, one of Table 1 to Table 3.

Optionally, the X entries deleted from the original MCS table may include but are not limited to an MCS with non-constant amplitude. For example, an MCS with a 16QAM, 64QAM, or 256QAM modulation scheme may be deleted from the original MCS table. In addition, the deleted X entries may also include an MCS with a low coding rate and constant amplitude. For example, an MCS with a QPSK modulation scheme and a coding rate that, when multiplied by 1024, equals 120 in the original MCS table may be deleted.

Optionally, the X entries deleted from the original MCS table may be consecutive or inconsecutive in the MCS table. This is not specifically limited in this application.

Optionally, the X newly added MCSs may meet a feature of one or more of the first MCS, the second MCS, the third MCS, or the fourth MCS.

Optionally, an MCS index in the MCS table may be represented by using 5 bits, or may occupy 5 bits. That is, the MCS table may include 32 entries. Alternatively, the MCS index may be represented by using 4 bits, or may occupy 4 bits. That is, the MCS table may include 16 entries. A quantity of bits occupied by the MCS index in the MCS table is not limited in this application. In the following description process, an example in which the MSC index in the MCS table occupies 4 bits and 5 bits is used for description.

An example in which the first MCS set includes all MCSs in the foregoing example and some MCSs in Table 1 is used. Table 5 shows a type of first MCS set (table) provided in this application. The MCS index occupies 5 bits. MCSs corresponding to an MCS index 0 to an MCS index 9 are the same as those in Table 1, MCS indexes 10 to 14 correspond to QPSK configurations with higher coding rates, MCS indexes 15 to 21 correspond to an MCS with 8PSK, and MCS indexes 22 to 31 are set as reserved.

**Table 5**

| MCS index $I_{MCS}$ | Modulation order (Modulation order) $Q_m$ | Target coding rate (Target code rate) $R×[1024]$ | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |

(continued)

| MCS index $I_{MCS}$ | Modulation order (Modulation order)$Q_m$ | Target coding rate (Target code rate) $R \times 1024$ | Spectral efficiency (Spectral efficiency) |
|---|---|---|---|
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 2 | 719 | 1.4043 |
| 11 | 2 | 772 | 1.5078 |
| 12 | 2 | 841 | 1.6426 |
| 13 | 2 | 910 | 1.7773 |
| 14 | 2 | 948 | 1.8516 |
| 15 | 3 | 666 | 1.9512 |
| 16 | 3 | 719 | 2.1064 |
| 17 | 3 | 772 | 2.2617 |
| 18 | 3 | 822 | 2.4082 |
| 19 | 3 | 873 | 2.5576 |
| 20 | 3 | 910 | 2.6660 |
| 21 | 3 | 948 | 2.7773 |
| 22 | Reserved (reserved) | | |
| 23 | Reserved (reserved) | | |
| | | | |
| 29 | Reserved (reserved) | | |
| 30 | Reserved (reserved) | | |
| 31 | Reserved (reserved) | | |

It should be noted that the correspondence between the MCS indexes and the parameters shown in Table 5 is merely an example. This is not specifically limited in this application. For example, a modulation order corresponding to the MCS index 10 may not be 2, and/or a value obtained by multiplying a corresponding coding rate by 1024 may not be 719.

In another possible implementation, the first MCS set may include at least one of the following MCSs:

A modulation order is 2, and a target coding rate ×[1024] is 635. Optionally, corresponding spectral efficiency may be 1.2402.
A modulation order is 2, and a target coding rate ×[1024] is 679. Optionally, corresponding spectral efficiency may be 1.3262.
A modulation order is 2, and a target coding rate ×[1024] is 748. Optionally, corresponding spectral efficiency may be 1.4609.
A modulation order is 2, and a target coding rate ×[1024] is 798. Optionally, corresponding spectral efficiency may be 1.5586.
A modulation order is 2, and a target coding rate ×[1024] is 850. Optionally, corresponding spectral efficiency may be 1.6602.
A modulation order is 2, and a target coding rate ×[1024] is 889. Optionally, corresponding spectral efficiency may be 1.7363.
A modulation order is 2, and a target coding rate ×[1024] is 910. Optionally, corresponding spectral efficiency may be 1.7773.
A modulation order is 2, and a target coding rate ×[1024] is 948. Optionally, corresponding spectral efficiency may be 1.8516.

A modulation order is 3, and a target coding rate $\times$[1024] is 707. Optionally, corresponding spectral efficiency may be 2.0713.

A modulation order is 3, and a target coding rate $\times$[1024] is 748. Optionally, corresponding spectral efficiency may be 2.1914.

A modulation order is 3, and a target coding rate $\times$[1024] is 809. Optionally, corresponding spectral efficiency may be 2.3701.

A modulation order is 3, and a target coding rate $\times$[1024] is 850. Optionally, corresponding spectral efficiency may be 2.4902.

A modulation order is 3, and a target coding rate $\times$[1024] is 901. Optionally, corresponding spectral efficiency may be 2.6396.

A modulation order is 3, and a target coding rate $\times$[1024] is 921. Optionally, corresponding spectral efficiency may be 2.6982.

A modulation order is 3, and a target coding rate $\times$[1024] is 948. Optionally, corresponding spectral efficiency may be 2.7773.

It should be noted that one row in the foregoing example may represent one MCS. In addition, the spectral efficiency is an optional value of a corresponding modulation order and coding rate. During actual application, the spectral efficiency may alternatively be another value. The spectral efficiency of the MCS provided in this embodiment is not specifically limited in this application.

Optionally, in addition to the MCSs in the foregoing example, the first MCS set may further include another MCS that corresponds to a modulation symbol with constant amplitude. For example, the first MCS set may further include some or all MCSs whose modulation orders are 2 shown in Table 1 to Table 3.

For example, the first MCS set includes all MCSs in the foregoing example and some MCSs in Table 3. Table 6 shows a type of first MCS set (table) provided in this application. The MCS index occupies 5 bits. MCSs corresponding to an MCS index 0 to an MCS index 14 are the same as those in Table 3, and MCSs corresponding to modulation schemes that are 16QAM and 64QAM are excluded. MCS indexes 15 to 22 correspond to QPSK configurations with higher coding rates. A largest value obtained by multiplying a coding rate by 1024 reaches 948. Modulation and coding schemes corresponding to MCS indexes 23 to 29 are 8PSK, and a value range of values obtained by multiplying coding rates by 1024 is [first value, 948]. MCS indexes 30 and 31 are set as reserved.

**Table 6**

| MCS index $I_{MCS}$ | Modulation order (Modulation order)$Q_m$ | Target coding rate (Target code rate) $R\times$[1024] | Spectral efficiency (Spectral efficiency) |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 655 | 1.2793 |
| 16 | 2 | 707 | 1.3809 |

(continued)

| MCS index $I_{MCS}$ | Modulation order (Modulation order) $Q_m$ | Target coding rate (Target code rate) $R \times [1024]$ | Spectral efficiency (Spectral efficiency) |
|---|---|---|---|
| 17 | 2 | 748 | 1.4609 |
| 18 | 2 | 798 | 1.5586 |
| 19 | 2 | 850 | 1.6602 |
| 20 | 2 | 889 | 1.7363 |
| 21 | 2 | 910 | 1.7773 |
| 22 | 2 | 948 | 1.8516 |
| 23 | 3 | 707 | 2.0713 |
| 24 | 3 | 748 | 2.1914 |
| 25 | 3 | 809 | 2.3701 |
| 26 | 3 | 850 | 2.4902 |
| 27 | 3 | 901 | 2.6396 |
| 28 | 3 | 921 | 2.6982 |
| 29 | 3 | 948 | 2.7773 |
| 30 | 4 | Reserved (reserved) | |
| 31 | 6 | Reserved (reserved) | |

FIG. 12 is an SNR-BLER curve chart corresponding to the MCS indexes 14 to 22 shown in Table 6. SNR-BLER curves from left to right correspond to the MCS indexes 14 to 22 sequentially. It can be learned from FIG. 12 that SNR distribution in a BLER 10% is even. That is, when a BLER is 10%, a difference between SRNs corresponding to any two adjacent coding rates is close. This meets a design requirement of an MCS table.

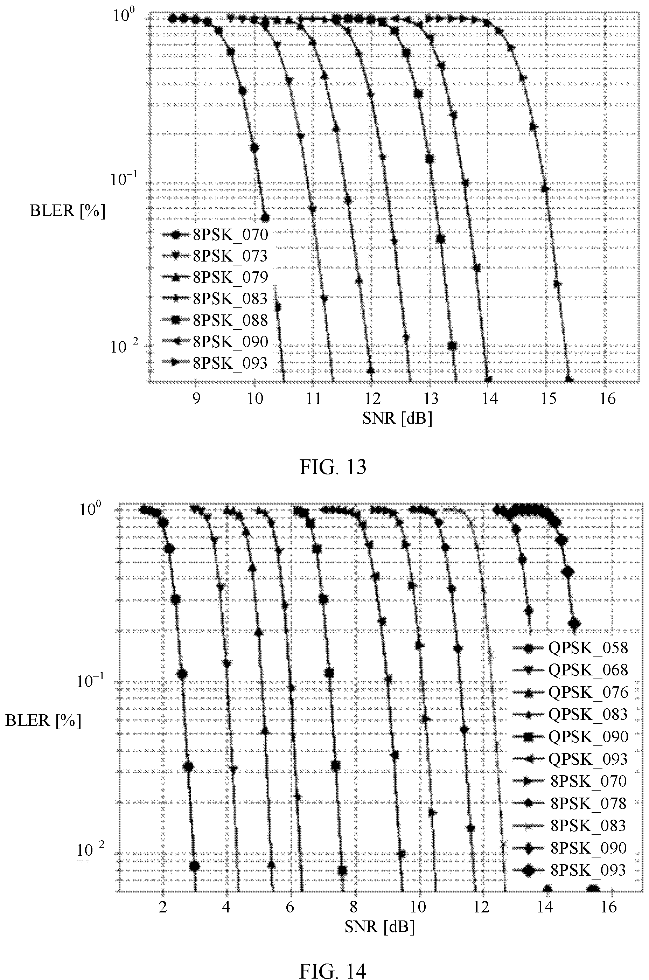

FIG. 13 is an SNR-BLER curve chart corresponding to the MCS indexes 23 to 29 shown in Table 6. SNR-BLER curves from left to right correspond to the MCS indexes 23 to 29 sequentially. It can be learned from FIG. 13 that SNR distribution in a BLER 10% is also even, and this meets a design requirement of an MCS table. Therefore, the MCS table shown in Table 6 is practical.

It should be noted that the correspondence between the MCS indexes and the parameters shown in Table 6 is merely an example. This is not specifically limited in this application.

In still another possible implementation, the first MCS set may include at least one of the following MCSs:

A modulation order is 2, and a target coding rate $\times[1024]$ is 251. Optionally, corresponding spectral efficiency may be 0.4902.
A modulation order is 2, and a target coding rate $\times[1024]$ is 308. Optionally, corresponding spectral efficiency may be 0.6016.
A modulation order is 2, and a target coding rate $\times[1024]$ is 379. Optionally, corresponding spectral efficiency may be 0.7402.
A modulation order is 2, and a target coding rate $\times[1024]$ is 449. Optionally, corresponding spectral efficiency may be 0.8770.
A modulation order is 2, and a target coding rate $\times[1024]$ is 526. Optionally, corresponding spectral efficiency may be 1.0273.
A modulation order is 2, and a target coding rate $\times[1024]$ is 602. Optionally, corresponding spectral efficiency may be 1.1758.
A modulation order is 2, and a target coding rate $\times[1024]$ is 695. Optionally, corresponding spectral efficiency may be 1.3574.
A modulation order is 2, and a target coding rate $\times[1024]$ is 775. Optionally, corresponding spectral efficiency may be 1.5137.
A modulation order is 2, and a target coding rate $\times[1024]$ is 850. Optionally, corresponding spectral efficiency may be 1.6602.
A modulation order is 2, and a target coding rate $\times[1024]$ is 921. Optionally, corresponding spectral efficiency may be 1.7988.

A modulation order is 2, and a target coding rate $\times[1024]$ is 948. Optionally, corresponding spectral efficiency may be 1.8516.

A modulation order is 3, and a target coding rate $\times[1024]$ is 707. Optionally, corresponding spectral efficiency may be 2.0713.

A modulation order is 3, and a target coding rate $\times[1024]$ is 795. Optionally, corresponding spectral efficiency may be 2.3291.

A modulation order is 3, and a target coding rate $\times[1024]$ is 850. Optionally, corresponding spectral efficiency may be 2.4902.

A modulation order is 3, and a target coding rate $\times[1024]$ is 921. Optionally, corresponding spectral efficiency may be 2.6982.

A modulation order is 3, and a target coding rate $\times[1024]$ is 948. Optionally, corresponding spectral efficiency may be 2.7773.

It should be noted that one row in the foregoing example may represent one MCS. In addition, the spectral efficiency is an optional value of a corresponding modulation order and coding rate. During actual application, the spectral efficiency may alternatively be another value. The spectral efficiency of the MCS provided in this embodiment is not specifically limited in this application.

For example, the first MCS set includes all MCSs in the foregoing example. Table 7 shows a type of first MCS set (table) provided in this application. The MCS index occupies 4 bits. Modulation schemes corresponding to MCS indexes 0 to 10 are QPSK, and modulation schemes corresponding to MCS indexes 11 to 15 are 8PSK. A range of a value obtained by multiplying a coding rate corresponding to QPSK by 1024 may be [251, 948]. A range of a value obtained by multiplying a coding rate corresponding to 8PSK by 1024 may be [first value, 948].

**Table 7**

| MCS index $I_{MCS}$ | Modulation order (Modulation order)$Q_m$ | Target coding rate (Target code rate) $R\times[1024]$ | Spectral efficiency (Spectral efficiency) |
|---|---|---|---|
| 0 | 2 | 251 | 0.4902 |
| 1 | 2 | 308 | 0.6016 |
| 2 | 2 | 379 | 0.7402 |
| 3 | 2 | 449 | 0.8770 |
| 4 | 2 | 526 | 1.0273 |
| 5 | 2 | 602 | 1.1758 |
| 6 | 2 | 695 | 1.3574 |
| 7 | 2 | 775 | 1.5137 |
| 8 | 2 | 850 | 1.6602 |
| 9 | 2 | 921 | 1.7988 |
| 10 | 2 | 948 | 1.8516 |
| 11 | 3 | 707 | 2.0713 |
| 12 | 3 | 795 | 2.3291 |
| 13 | 3 | 850 | 2.4902 |
| 14 | 3 | 921 | 2.6982 |
| 15 | 3 | 948 | 2.7773 |

FIG. 14 is an SNR-BLER curve chart corresponding to the MCS indexes 5 to 15 shown in Table 7. SNR-BLER curves from left to right correspond to the MCS indexes 5 to 15 sequentially. It can be learned from FIG. 14 that SNR distribution in a BLER 10% is also even, and this meets a design requirement of an MCS table. Therefore, the MCS table shown in Table 7 is practical.

It should be noted that the correspondence between the MCS indexes and the parameters shown in Table 7 is merely an example. This is not specifically limited in this application.

In still another possible implementation, the first MCS set may include at least one of the following MCSs, and a modulation order 4 indicates that a modulation scheme is 16PSK:

A modulation order is 2, and a target coding rate ×[1024] is 308. Optionally, corresponding spectral efficiency may be 0.6016.

A modulation order is 2, and a target coding rate ×[1024] is 379. Optionally, corresponding spectral efficiency may be 0.7402.

A modulation order is 2, and a target coding rate ×[1024] is 449. Optionally, corresponding spectral efficiency may be 0.8770.

A modulation order is 2, and a target coding rate ×[1024] is 526. Optionally, corresponding spectral efficiency may be 1.0273.

A modulation order is 2, and a target coding rate ×[1024] is 602. Optionally, corresponding spectral efficiency may be 1.1758.

A modulation order is 2, and a target coding rate ×[1024] is 679. Optionally, corresponding spectral efficiency may be 1.3262.

A modulation order is 2, and a target coding rate ×[1024] is 772. Optionally, corresponding spectral efficiency may be 1.5078.

A modulation order is 2, and a target coding rate ×[1024] is 841. Optionally, corresponding spectral efficiency may be 1.6426.

A modulation order is 2, and a target coding rate ×[1024] is 948. Optionally, corresponding spectral efficiency may be 1.8516.

A modulation order is 3, and a target coding rate ×[1024] is 679. Optionally, corresponding spectral efficiency may be 1.9893.

A modulation order is 3, and a target coding rate ×[1024] is 772. Optionally, corresponding spectral efficiency may be 2.2617.

A modulation order is 3, and a target coding rate ×[1024] is 841. Optionally, corresponding spectral efficiency may be 2.4639.

A modulation order is 3, and a target coding rate ×[1024] is 948. Optionally, corresponding spectral efficiency may be 2.7773.

A modulation order is 4, and a target coding rate ×[1024] is 772. Optionally, corresponding spectral efficiency may be 3.0156.

A modulation order is 4, and a target coding rate ×[1024] is 841. Optionally, corresponding spectral efficiency may be 3.2852.

A modulation order is 4, and a target coding rate ×[1024] is 948. Optionally, corresponding spectral efficiency may be 3.7031.

It should be noted that one row in the foregoing example may represent one MCS. In addition, the spectral efficiency is an optional value of a corresponding modulation order and coding rate. During actual application, the spectral efficiency may alternatively be another value. The spectral efficiency of the MCS provided in this embodiment is not specifically limited in this application.

For example, the first MCS set includes all MCSs in the foregoing example. Table 8 shows a type of first MCS set (table) provided in this application. The MCS index occupies 4 bits. Modulation schemes corresponding to MCS indexes 0 to 8 are QPSK, a smallest value obtained by multiplying a coding rate by 1024 is 308, and a largest value is 948. Modulation schemes corresponding to MCS indexes 9 to 12 are 8PSK, a smallest value obtained by multiplying a coding rate by 1024 is 679, and a largest value is 948. Modulation schemes corresponding to MCS indexes 13 to 15 are 16PSK, a smallest value obtained by multiplying a coding rate by 1024 is 772, and a largest value is 948.

**Table 8**

| MCS index $I_{MCS}$ | Modulation order (Modulation order)$Q_m$ | Target coding rate (Target code rate) $R×[1024]$ | Spectral efficiency (Spectral efficiency) |
|---|---|---|---|
| 0 | 2 | 308 | 0.6016 |
| 1 | 2 | 379 | 0.7402 |
| 2 | 2 | 449 | 0.8770 |
| 3 | 2 | 526 | 1.0273 |
| 4 | 2 | 602 | 1.1758 |
| 5 | 2 | 679 | 1.3262 |

(continued)

| MCS index $I_{MCS}$ | Modulation order (Modulation order)$Q_m$ | Target coding rate (Target code rate) $R \times [1024]$ | Spectral efficiency (Spectral efficiency) |
|---|---|---|---|
| 6 | 2 | 772 | 1.5078 |
| 7 | 2 | 841 | 1.6426 |
| 8 | 2 | 948 | 1.8516 |
| 9 | 3 | 679 | 1.9893 |
| 10 | 3 | 772 | 2.2617 |
| 11 | 3 | 841 | 2.4639 |
| 12 | 3 | 948 | 2.7773 |
| 13 | 4 | 772 | 3.0156 |
| 14 | 4 | 841 | 3.2852 |
| 15 | 4 | 948 | 3.7031 |

It should be noted that the correspondence between the MCS indexes and the parameters shown in Table 8 is merely an example. This is not specifically limited in this application.

Based on Table 8, the index of the MCS in the first MCS set may be represented by 4 bits, so that indication overheads of the first MCS set can be reduced. In addition, in a scenario in which sensing is performed by repeatedly transmitting data information, a sensing-communication signal may not need a large quantity of MCS options, and does not need some MCS options with a low coding rate. Therefore, the first MCS set shown in Table 8 is practical.

In still another possible implementation, the first MCS set may include at least one of the following MCSs:

A modulation order is 2, and a target coding rate $\times[1024]$ is 748. Optionally, corresponding spectral efficiency may be 1.4609.

A modulation order is 2, and a target coding rate $\times[1024]$ is 798. Optionally, corresponding spectral efficiency may be 1.5586.

A modulation order is 2, and a target coding rate $\times[1024]$ is 871. Optionally, corresponding spectral efficiency may be 1.7012.

A modulation order is 2, and a target coding rate $\times[1024]$ is 910. Optionally, corresponding spectral efficiency may be 1.7773.

A modulation order is 2, and a target coding rate $\times[1024]$ is 948. Optionally, corresponding spectral efficiency may be 1.8516.

A modulation order is 3, and a target coding rate $\times[1024]$ is 707. Optionally, corresponding spectral efficiency may be 2.0713.

A modulation order is 3, and a target coding rate $\times[1024]$ is 748. Optionally, corresponding spectral efficiency may be 2.1914.

A modulation order is 3, and a target coding rate $\times[1024]$ is 809. Optionally, corresponding spectral efficiency may be 2.3701.

A modulation order is 3, and a target coding rate $\times[1024]$ is 850. Optionally, corresponding spectral efficiency may be 2.4902.

A modulation order is 3, and a target coding rate $\times[1024]$ is 901. Optionally, corresponding spectral efficiency may be 2.6396.

A modulation order is 3, and a target coding rate $\times[1024]$ is 921. Optionally, corresponding spectral efficiency may be 2.6982.

A modulation order is 3, and a target coding rate $\times[1024]$ is 948. Optionally, corresponding spectral efficiency may be 2.7773.

A modulation order is 4, and a target coding rate $\times[1024]$ is 748. Optionally, corresponding spectral efficiency may be 2.9219.

A modulation order is 4, and a target coding rate $\times[1024]$ is 798. Optionally, corresponding spectral efficiency may be 3.1172.

A modulation order is 4, and a target coding rate $\times[1024]$ is 850. Optionally, corresponding spectral efficiency may be 3.3203.

A modulation order is 4, and a target coding rate $\times[1024]$ is 870. Optionally, corresponding spectral efficiency may be 3.3984.

A modulation order is 4, and a target coding rate ×[1024] is 901. Optionally, corresponding spectral efficiency may be 3.5195.

A modulation order is 4, and a target coding rate ×[1024] is 921. Optionally, corresponding spectral efficiency may be 3.5977.

A modulation order is 4, and a target coding rate ×[1024] is 948. Optionally, corresponding spectral efficiency may be 3.7031.

It should be noted that one row in the foregoing example may represent one MCS. In addition, the spectral efficiency is an optional value of a corresponding modulation order and coding rate. During actual application, the spectral efficiency may alternatively be another value. The spectral efficiency of the MCS provided in this embodiment is not specifically limited in this application.

Optionally, in addition to the MCSs in the foregoing example, the first MCS set may further include another MCS that corresponds to a modulation symbol with constant amplitude. For example, the first MCS set may further include some or all MCSs whose modulation orders are 2 shown in Table 1 to Table 3.

For example, the first MCS set includes all MCSs in the foregoing example and some MCSs in Table 1. Table 9 shows a type of first MCS set (table) provided in this application. The MCS index occupies 5 bits. MCSs corresponding to MCS indexes 0 to 9 are MCSs corresponding to MCS indexes 0 to 9 in Table 1. MCS indexes 10 to 14 correspond to QPSK and high coding rates, and a largest value obtained by multiplying a coding rate by 1024 may reach 948. MCS indexes 15 to 21 correspond to MCSs with an 8PSK modulation scheme, and a range of values obtained by multiplying coding rates by 1024 is [first value, 948]. MCS indexes 22 to 28 correspond to MCSs with a 16PSK modulation scheme, and a range of values obtained by multiplying coding rates by 1024 is [second value, 948]. MCS indexes 29 to 31 are set as reserved.

**Table 9**

| MCS index $I_{MCS}$ | Modulation order (Modulation order)$Q_m$ | Target coding rate (Target code rate) $R \times [1024]$ | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 2 | 748 | 1.4609 |
| 11 | 2 | 798 | 1.5586 |
| 12 | 2 | 871 | 1.7012 |
| 13 | 2 | 910 | 1.7773 |
| 14 | 2 | 948 | 1.8516 |
| 15 | 3 | 707 | 2.0713 |
| 16 | 3 | 748 | 2.1914 |
| 17 | 3 | 809 | 2.3701 |
| 18 | 3 | 850 | 2.4902 |
| 19 | 3 | 901 | 2.6396 |
| 20 | 3 | 921 | 2.6982 |
| 21 | 3 | 948 | 2.7773 |

(continued)

| MCS index $I_{MCS}$ | Modulation order (Modulation order) $Q_m$ | Target coding rate (Target code rate) $R \times [1024]$ | Spectral efficiency (Spectral efficiency) |
|---|---|---|---|
| 22 | 4 | 748 | 2.9219 |
| 23 | 4 | 798 | 3.1172 |
| 24 | 4 | 850 | 3.3203 |
| 25 | 4 | 870 | 3.3984 |
| 26 | 4 | 901 | 3.5195 |
| 27 | 4 | 921 | 3.5977 |
| 28 | 4 | 948 | 3.7031 |
| 29 | Reserved (reserved) | | |
| 30 | Reserved (reserved) | | |
| 31 | Reserved (reserved) | | |

It should be noted that the correspondence between the MCS indexes and the parameters shown in Table 9 is merely an example. This is not specifically limited in this application.

It should be noted that the MCS tables shown in Table 5 to Table 7 are merely examples of the first MCS set. This application does not limit the first MCS set to be shown in Table 5 to Table 7, values of parameters of the MCS in the first MCS set are not limited to values in Table 5 to Table 7, and a quantity of bits occupied by an MCS index in the first MCS set is not limited to 4 bits or 5 bits.

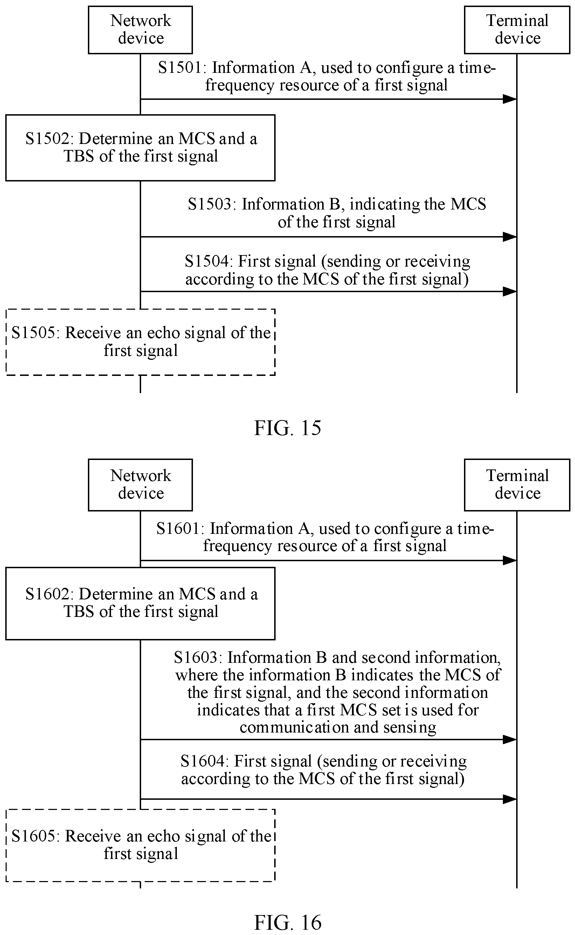

Based on the first MCS set, the following describes a scheduling transmission procedure of the first signal by using an example in which the first signal is a sensing-communication signal. As shown in FIG. 15, the procedure may include the following steps.

S1501: A network device sends information A to a terminal device. Correspondingly, the terminal device receives the information A from the network device.

Optionally, the information A may be carried in one or more of DCI, a media access control control element (media access control control element, MAC CE), or RRC signaling.

The information A may be used to configure a time-frequency resource of the first signal. In a possible implementation, the information A may indicate a time domain resource and a frequency domain resource of the first signal. For example, for the time domain resource, the information A may indicate an index of a start time domain symbol of the first signal and a quantity of occupied time domain symbols, or an index of a time domain symbol occupied by the first signal. For the frequency domain resource, the information A may indicate an index of a start RB of the first signal and a quantity of occupied RBs, or an index of an RB occupied by the first signal, or the like.

In another possible implementation, a time-frequency resource configuration set of the sensing-communication signal may be predefined by using higher layer signaling, and then a time-frequency resource configuration in the time-frequency resource configuration set is indicated to the terminal device by using DCI, and is used as a time-frequency resource configuration of the first signal.

S1502: The network device determines an MCS and a TBS of the first signal. The MCS of the first signal belongs to a first MCS set.

Optionally, the network device may determine the MCS and the TBS of the first signal based on a CQI fed back by the terminal device. For example, considering that there may be a deviation between channel quality indicated by the CQI and current channel quality, the network device may adjust, based on an initial block error rate (initial block error rate, IBLER), the CQI fed back by the terminal device, and obtain accurate channel quality, to select a proper MCS. For example, when channel quality is good, an MCS with a high-order modulation scheme and a higher coding rate may be selected. When channel quality is poor, an MCS with a low-order modulation scheme and a lower coding rate may be selected. Based on this, the network device adjusts the CQI fed back by the terminal device, and then selects the MCS, so that impact of an inaccurate CQI fed back by the terminal device on system performance can be reduced, system transmission efficiency can be improved, and a throughput can be maximized.

Optionally, the CQI fed back by the terminal device may be a CQI applicable to the sensing-communication signal. The CQI applicable to the sensing-communication signal is described in a subsequent embodiment, and details are not described herein.

S1503: The network device sends information B to the terminal device. Correspondingly, the terminal device receives the information B from the network device.

The information B indicates the MCS of the first signal. Optionally, the information B may be further used to schedule transmission of the first signal.

Optionally, the information B may be carried in DCI. Certainly, the information B may alternatively be carried in other signaling. This is not specifically limited in this application.

Optionally, the information B may indicate an index of the MCS of the first signal. In this scenario, the terminal device needs to first learn of the first MCS set to which the MCS of the first signal belongs. For example, the first MCS set may be one of Table 5 to Table 9.

In a possible implementation, the network device may configure the first MCS set for the terminal device through RRC signaling. For example, the network device may use an MCS table (mcs-Table) field in a PDSCH configuration information element (PDSCH-Config information element) in the RRC signaling to carry the first MCS set. The following format of the PDSCH configuration information element is used as an example, and the network device may add a sense option to the mcs-Table field to configure the first MCS set. Certainly, the newly added option may also have another name. This is not specifically limited in this application.

> PDSCH-Config ::=    SEQUENCE{
>
> dataScramblingIdentityPDSCH                                INTEGER(0..1023) OPTIONAL,
>
> dmrs-DownlinkForPDSCH-MappingTypeA        SetupRelease   {   DMRS-DownlinkConfig } OPTIONAL,
>
> dmrs-DownlinkForPDSCH-MappingTypeB        SetupRelease   {   DMRS-DownlinkConfig } OPTIONAL,
>
> …
>
> rateMatchPatternGroup2                          RateMatchPatternGroup OPTIONAL,
>
> rbg-Size                              ENUMERATED{ config1, config2},
>
> mcs-Table                                ENUMERATED{  qam256, qam64LowSE, sense }   OPTIONAL,
>
> maxNrofCodeWordsScheduledByDCI          ENUMERATED{    n1,    n2} OPTIONAL,
>
> …
>
> }

In another possible implementation, a protocol may predefine one or more MCS sets used for the sensing-communication signal. When the protocol predefines an MCS set used for the sensing-communication signal, the network device and the terminal device use the MCS set by default. When the protocol predefines a plurality of MCS sets used for the sensing-communication signal, the network device may select one MCS set from the plurality of MCS sets, and indicate, to the terminal device, the MCS set selected by the network device. For example, the network device may send an index of the MCS set to the terminal device.

Optionally, the information B may indicate the index of the MCS of the first signal by using a bit state and a bitmap (bitmap). For example, in the indication manner using the bit state, one bit state may correspond to one MCS index, and a total quantity of bits may be equal to $\lceil \log_2 M \rceil$, where $\lceil \ \rceil$ represents rounding up, and M is a quantity of MCS options in the first MCS set, or is a total quantity of MCS indexes in the first MCS set. For example, the first MCS set includes 16 options, and 16 MCS indexes may be indicated by using 16 states of 4 bits. In this case, a possible correspondence between the bit states and the MCS indexes may be shown in Table 10.

**Table 10**

| Bit state | MCS index |
|-----------|-----------|
| 0000 | 0 |
| 0001 | 1 |
| 0010 | 2 |
| 0011 | 3 |
| 0100 | 4 |
| 0101 | 5 |
| 0110 | 6 |
| 0111 | 7 |
| 1000 | 8 |
| 1001 | 9 |
| 1010 | 10 |
| 1011 | 11 |
| 1100 | 12 |
| 1101 | 13 |
| 1110 | 14 |
| 1111 | 15 |

S1504: The network device sends the first signal according to the MCS and the TBS of the first signal. Correspondingly, the terminal device receives the first signal according to the MCS of the first signal.

It should be noted that in FIG. 15, an example in which the first signal is a downlink signal is used for description. In addition, the first signal may alternatively be an uplink signal. In other words, step S1504 may be replaced with: The terminal device sends the first signal according to the MCS of the first signal, and correspondingly, the network device receives the first signal according to the MCS of the first signal.

Optionally, after receiving the information B, the terminal device may obtain the MCS of the first signal, to obtain a modulation order and a target coding rate that are used for transmitting the first signal. Further, time-frequency resource scheduling information of the first signal may be obtained by using the information B. Therefore, the terminal device may calculate the TBS based on information such as the time-frequency resource scheduling information and the MCS of the first signal, to determine a transport block size of useful information sent on a network at a scheduling moment, and demodulate the first signal.

S1505: The network device receives an echo signal of the first signal. For details, refer to the related description in step S403. Details are not described herein again.

It may be understood that when the first signal is an uplink signal, step S1505 may be replaced with: The terminal device receives an echo signal of the first signal.

In the procedure shown in FIG. 15, it may be considered that the network device configures, for the terminal device, a complete MCS table used for the sensing-communication signal, or a protocol predefines a complete MCS table used for the sensing-communication signal. In addition, the network device may configure, for the terminal device, an MCS table defined in the existing protocol. For the sensing-communication signal:

In a possible implementation, one or more MCSs may be predefined, and the one or more MCSs are used to replace one or more rows in the MCS table defined in the existing protocol (for example, replace an MCS option with non-constant amplitude). The one or more MCSs meet a feature of one or more of the first MCS, the second MCS, the third MCS, or the fourth MCS.

For example, the network device configures the MCS table shown in Table 1 for the terminal device. For the sensing-communication signal, MCSs whose indexes are 10 to 21 shown in Table 5 may be predefined. In a sensing scenario, when the network device indicates that an MCS index is 11, the terminal device may determine that the modulation order of the MCS is 2, and the value obtained by multiplying the coding rate by 1024 is 719, instead of the modulation order 4 and the value 378 obtained by multiplying the coding rate by 1024 shown in Table 1.

In another possible implementation, a modulation scheme of the sensing-communication signal may be predefined as a specific constant modulus modulation scheme (for example, QPSK). The constant modulus modulation scheme indicates that amplitude of a modulation symbol corresponding to the modulation scheme is constant. Alternatively, modulation schemes corresponding to MCS indexes X1 to X2 in an original MCS table may be predefined as a constant modulus modulation scheme 1 (for example, QPSK), and modulation schemes corresponding to MCS indexes X2+1 to X3 are predefined as a constant modulus modulation scheme 2 (for example, 8PSK). A coding rate in an MCS table defined in the existing protocol may be still used. That is, a value obtained by multiplying a coding rate of the $n^{th}$ MCS in the first MCS set by 1024 is a value obtained by multiplying a coding rate of the $n^{th}$ MCS in a third MCS set by 1024, and n is a positive integer. The third MCS set includes an MCS with constant amplitude and an MCS with non-constant amplitude. For example, the third MCS set may be shown in Table 1, Table 2, or Table 3.

For example, the network device configures the MCS table shown in Table 1 for the terminal device, and for a sensing-communication signal, a modulation scheme corresponding to an MCS index 15 in Table 1 is predefined as 8PSK. When the network device indicates that the MCS index is 15, the terminal device may determine that a modulation order of the MCS is 3, the corresponding modulation scheme is 8PSK, and a value obtained by multiplying a coding rate by 1024 is 616, instead of the modulation order 4, the corresponding 16QAM modulation scheme, and a value 616 obtained by multiplying the coding rate by 1024 shown in Table 1.

Based on the foregoing two possible implementations, this application further provides a scheduling transmission procedure of the first signal. As shown in FIG. 16, the procedure may include the following steps.

S1601: A network device sends information A to a terminal device. Correspondingly, the terminal device receives the information A from the network device.

S1602: The network device determines an MCS and a TBS of the first signal. The MCS of the first signal belongs to a first MCS set.

For implementation of steps S1601 and S1602, refer to related descriptions of steps S1501 and S1502. Details are not described herein again.

S1603: The network device sends information B and second information to the terminal device. Correspondingly, the terminal device receives the information B and the second information from the network device.

The information B indicates the MCS of the first signal. The second information may indicate whether a current MCS configuration is used for only communication or for communication and sensing. When the first signal is a sensing-communication signal, the second information may indicate that the MCS configuration is used for communication and sensing, or may indicate that the first MCS set is used for communication and sensing.

Optionally, that the second information indicates whether the MCS configuration is used for communication or for communication and sensing may also be understood as: The second information indicates whether the first signal is a communication signal or a sensing-communication signal.

Optionally, the second information may implement indication by using 1 bit. For example, a value "1" of the bit indicates that the MCS configuration is used for communication and sensing, or indicates that the first signal is a sensing-communication signal. A value "0" of the bit indicates that the MCS configuration is used for communication, or indicates that the first signal is a communication signal.

Optionally, the information B and the second information may be carried in same signaling. For example, the information B and the second information may be carried in DCI, and Sense_Flag may be added to the DCI to indicate the second information. Certainly, the information B and the second information may alternatively be carried in different signaling. This is not specifically limited in this application.

Optionally, after receiving the second information, the terminal device may determine the MCS of the first signal based on the second information and the information B. For example, when the second information indicates that the MCS configuration is used for communication and sensing, the terminal device determines that the modulation scheme of the MCS of the first signal is a predefined modulation scheme. For details, refer to related descriptions in the foregoing two possible implementations. Details are not described herein again.

S1604: The network device sends the first signal according to the MCS and the TBS of the first signal. Correspondingly, the terminal device receives the first signal according to the MCS of the first signal.

S1605: The network device receives an echo signal of the first signal.

For implementation of steps S1604 and S1605, refer to related descriptions of steps S1504 and S1505. Details are not described herein again.

In the foregoing embodiment, an example in which amplitude of a modulation symbol corresponding to an MCS in the first MCS set is constant is used for description. In some implementation scenarios, the first MCS set may also include an MCS with non-constant amplitude. In other words, the first MCS set includes an MCS with constant amplitude and an MCS with non-constant amplitude. For the MCS with constant amplitude, refer to the foregoing related descriptions of the MCS in the first MCS set. A modulation scheme of the MCS with non-constant amplitude may be, for example, 64QAM. For example, in a scenario in which channel quality is good, the first MCS set may include an MCS with constant amplitude and an MCS with non-constant amplitude.

The foregoing describes the MCS provided in this application. In addition, this application further provides a related design for a CQI. The following describes this.

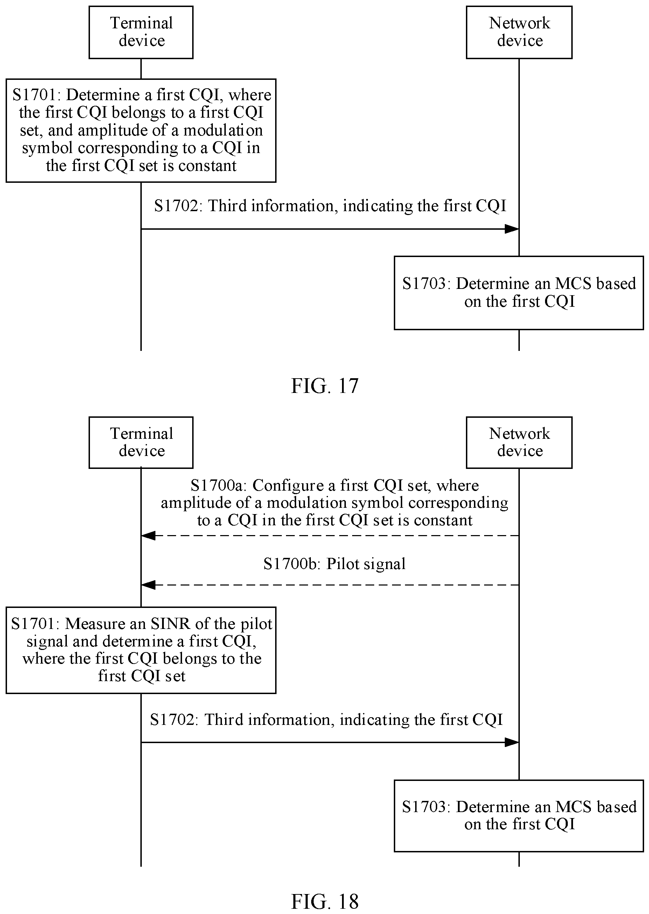

FIG. 17 shows a CQI feedback procedure according to this application. The procedure includes the following steps.

S1701: A terminal device determines a first CQI.

The first CQI belongs to a first CQI set. It should be noted that the CQI set in this application may alternatively be understood as a CQI table, or the CQI set includes all CQIs in a CQI table. In addition, the CQI set in this application may alternatively be described as a CQI group, a CQI table, or the like.

Amplitude of a modulation symbol corresponding to a CQI in the first CQI set is constant. When the first CQI set is understood as a CQI table, amplitude of modulation symbols corresponding to all CQIs included in the entire CQI table is constant. For example, a modulation symbol corresponding to a CQI may be understood as a modulation symbol (a complex number) of a modulation scheme of the CQI, or the modulation symbol corresponding to the CQI may be understood as a constellation point in a constellation diagram of the modulation scheme of the CQI.

Optionally, a CQI that corresponds to a modulation symbol with constant amplitude may be referred to as a constant modulus CQI or a CQI with constant amplitude. Correspondingly, a CQI that corresponds to a modulation symbol with non-constant amplitude may be referred to as a non-constant modulus CQI or a CQI with non-constant amplitude.

Optionally, a modulation scheme of the CQI in the first CQI set may include at least one of the following: BPSK, QPSK, 8PSK, or 16PSK.

Optionally, the first CQI set may be used for a sensing-communication signal. Alternatively, the first CQI set may be used for a communication signal. This is not specifically limited in this application.

S1702: The terminal device sends third information to the network device. Correspondingly, the network device receives the third information from the terminal device.

The third information indicates the first CQI. For example, the third information may include an index of the first CQI in the first CQI set.

S1703: The network device determines an MCS based on the first CQI. Further, the network device may determine a TBS based on the first CQI.

Optionally, after determining the MCS, the network device may indicate the MCS to the terminal device, so that the terminal device subsequently receives or sends data according to the MCS. After determining the TBS, the network device may send data according to the TBS.

For the first CQI set, in a possible implementation, the first CQI set may be configured by the network device for the terminal device. For example, as shown in FIG. 18, before step S1701, the method further includes the following step S1700a:

S1700a: The network device configures the first CQI set for the terminal device.

Optionally, the network device may configure the first CQI set for the terminal device through RRC signaling. For example, the network device may use a CQI table (cqi-Table) field in a channel state information (channel state information, CSI) report configuration information element (CSI-ReportConfig information element) to carry the first CQI set. The following format of the CSI report configuration information element is used as an example, and the network device may add a sense option to the cqi-Table field to configure the first CQI set. Certainly, the newly added option may also have another name. This is not specifically limited in this application.

```
CSI-ReportConfig ::=      SEQUENCE{

    reportConfigId                    CSI-ReportConfigId,

    carrier                           ServCellIndex   OPTIONAL,

    resourcesForChannelMeasurement    CSI-ResourceConfigId,

    csi-IM-ResourcesForInterference   CSI-ResourceConfigId   OPTIONAL,

    . . .

    . . .

    cqi-Table                         ENUMERATED{ table1, table2, table3, spare1,

sense }

    . . .

}
```

In another possible implementation, a protocol may predefine one or more CQI sets used for the sensing-communication signal. When the protocol predefines a CQI set used for the sensing-communication signal, the network device and the terminal device use the CQI set by default. When the protocol predefines a plurality of CQI sets used for the sensing-communication signal, the network device may select one CQI set from the plurality of CQI sets, and indicate, to the terminal device, the CQI set selected by the network device. For example, the network device may send an index of the CQI set to the terminal device.

Optionally, in step S1701, the terminal device may determine the first CQI by measuring a signal to interference plus noise ratio (signal to interference plus noise ratio, SINR) of a downlink pilot signal. Therefore, before step S1701, the method may further include the following step S1700b:

S1700b: The network device sends a pilot signal to the terminal device. Correspondingly, the terminal device receives the pilot signal from the network device.

Optionally, in this scenario, step S1701 may specifically include: The terminal device measures an SINR of the pilot signal, performs quantization calculation based on the SINR, determines the first CQI based on the first CQI set, and learns of the index of the first CQI.

For example, a higher SINR measured by the terminal device indicates better channel quality, the first CQI may correspond to a higher-order modulation scheme and a higher coding rate, and an index value of the first CQI is larger. A lower SINR measured by the terminal device indicates poorer channel quality, the first CQI may correspond to a lower-order modulation scheme and a lower coding rate, and an index value of the first CQI is smaller.

Optionally, for a design of the first CQI set, refer to the design of the first MCS set. For detailed descriptions, refer to the descriptions of the first MCS set. Details are not described herein again.

For example, for a CQI corresponding to a QPSK, 8PSK, or 16PSK modulation scheme in the first CQI set, a value obtained by multiplying a corresponding coding rate by 1024 is less than or equal to 948; or for a CQI corresponding to a 16PSK modulation scheme, a value obtained by multiplying a corresponding coding rate by 1024 is less than or equal to 901.

For another example, in the first CQI set, for a CQI corresponding to an 8PSK modulation scheme, a value obtained by multiplying a corresponding coding rate by 1024 is greater than or equal to 620. For a CQI corresponding to a 16PSK modulation scheme, a value obtained by multiplying a corresponding coding rate by 1024 is greater than or equal to 710.

For another example, the first CQI set may include a CQI corresponding to a QPSK modulation scheme and corresponding to a coding rate, where the coding rate multiplied by 1024 is greater than a threshold. The threshold may be, for example, 602.

It may be understood that, in the foregoing embodiments, the methods and/or the steps implemented by the network device may be implemented by a component (for example, a processor, a chip, a chip system, a circuit, a logical module, or software such as a chip or a circuit) that can be used in the network device; or the methods and/or the steps implemented by the terminal device may be implemented by a component (for example, a processor, a chip, a chip system, a circuit, a logical module, or software such as a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, or an apparatus including the terminal device, or a component that can be used in the terminal device, for example, a chip or a chip system. Alternatively, the communication apparatus may be the network device in the foregoing method embodiments, or an apparatus including the network device, or a component that can be used in the network device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

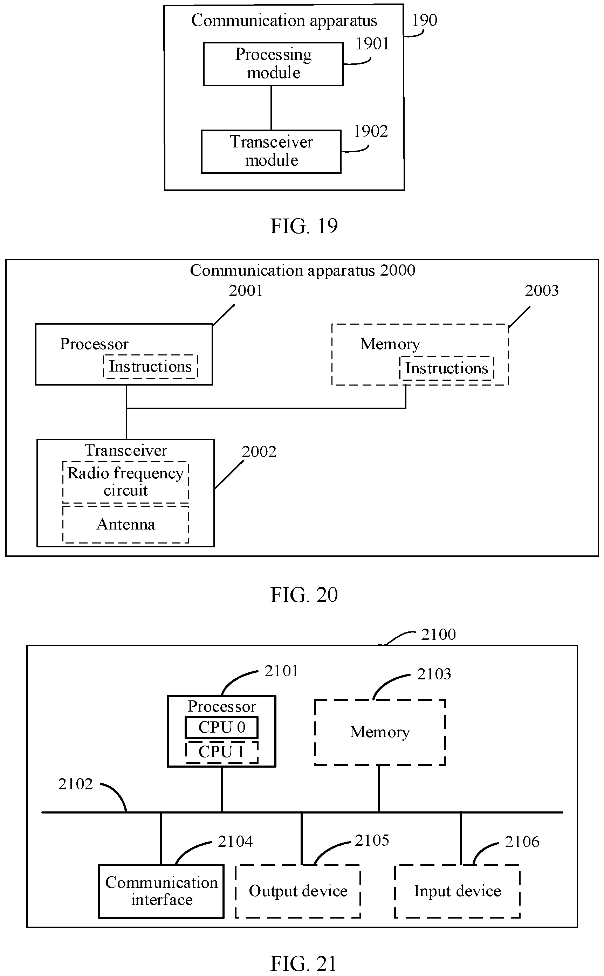

FIG. 19 of a communication apparatus is a diagram of a structure of a communication apparatus 190. The communication apparatus 190 includes a processing module 1901 and a transceiver module 1902. The communication apparatus 190 may be configured to implement a function of the network device or the terminal device.

In some embodiments, the communication apparatus 190 may further include a storage module (which is not shown in FIG. 19), configured to store program instructions and data.

In some embodiments, the transceiver module 1902 may also be referred to as a transceiver unit, configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module, respectively configured to perform receiving steps and sending steps performed by the network device or the terminal device in the foregoing method embodiments, and/or configured to support another process of the technology described in this specification. The processing module 1901 may be configured to perform processing (for example, determining and generating) steps performed by the network device or the terminal device in the foregoing method embodiments, and/or configured to support another process of the technology described in this specification.

When the communication apparatus 190 is configured to implement a function of the terminal device, in some embodiments, the transceiver module 1902 is configured to receive first information, where the first information indicates a modulation and coding scheme MCS of a first signal; and the processing module 1901 is configured to receive or send the first signal according to the MCS of the first signal through the transceiver module 1902. The MCS of the first signal belongs to a first MCS set, and amplitude of a modulation symbol corresponding to an MCS in the first MCS set is constant.

Optionally, the first signal is used for sensing and communication.

Optionally, the first MCS set includes a first MCS. A value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or the value obtained by multiplying the coding rate of the first MCS by 1024 is less than or equal to 901, and the modulation scheme of the first MCS is 16PSK.

Optionally, the first MCS set includes a second MCS, a modulation scheme of the second MCS is 8PSK, and a value obtained by multiplying a coding rate of the second MCS by 1024 is greater than or equal to 620.

Optionally, the first MCS set includes a second MCS, a modulation scheme of the second MCS is 8PSK, and a value obtained by multiplying a coding rate of the second MCS by 1024 is greater than or equal to a first value. The first value is a value obtained by multiplying 1024 by a coding rate at which first spectral efficiency is achieved in an 8PSK modulation scheme in a first signal-to-noise ratio, the first signal-to-noise ratio is a signal-to-noise ratio at a first block error rate, and the first spectral efficiency is spectral efficiency achieved in an MCS with a QPSK modulation scheme in the first signal-to-noise ratio.

Optionally, the first MCS set includes a third MCS, a modulation scheme of the third MCS is 16PSK, and a value obtained by multiplying a coding rate of the third MCS by 1024 is greater than or equal to 710.

Optionally, the first MCS set includes a third MCS, a modulation scheme of the third MCS is 16PSK, and a value obtained by multiplying a coding rate of the third MCS by 1024 is greater than or equal to a second value. The second value is a value obtained by multiplying 1024 by a coding rate at which second spectral efficiency is achieved in a 16PSK modulation scheme in a second signal-to-noise ratio, and the second signal-to-noise ratio is a signal-to-noise ratio at a second block error rate. The second spectral efficiency is greater than third spectral efficiency, and the third spectral efficiency is largest spectral efficiency achieved in an MCS with the 8PSK modulation scheme in the first MCS set at the second BLER.

Optionally, the first MCS set includes a fourth MCS, a modulation scheme of the fourth MCS is QPSK, and a value obtained by multiplying a coding rate of the fourth MCS by 1024 is greater than a threshold. The threshold is a value obtained by multiplying a coding rate of a fifth MCS by 1024, the fifth MCS is an MCS with a QPSK modulation scheme and a highest coding rate in a second MCS set, and the second MCS set includes an MCS with constant amplitude and an MCS with non-constant amplitude.

Optionally, the first MCS set includes a fourth MCS, a modulation scheme of the fourth MCS is QPSK, and a coding rate of the fourth MCS is greater than a coding rate of a fifth MCS. The fifth MCS is an MCS with a QPSK modulation scheme and a highest coding rate in a second MCS set, and the second MCS set includes an MCS with constant amplitude and an MCS with non-constant amplitude.

Optionally, a modulation scheme of the MCS in the first MCS set includes at least one of the following: binary phase shift keying BPSK, QPSK, 8PSK, or 16PSK.

Optionally, a value obtained by multiplying a coding rate of the $n^{th}$ MCS in the first MCS set by 1024 is a value obtained by multiplying a coding rate of the $n^{th}$ MCS in a third MCS set by 1024, the third MCS set includes an MCS with constant amplitude and an MCS with non-constant amplitude, and n is a positive integer.

Optionally, the transceiver module 1902 is further configured to receive second information. The second information indicates that the first MCS set is used for sensing and communication.

In some other embodiments, the transceiver module 1902 is configured to receive first information, where the first information indicates a modulation and coding scheme MCS of a first signal; and the processing module 1901 is configured to receive or send the first signal according to the MCS of the first signal through the transceiver module 1902. The MCS of the first signal belongs to a first MCS set, and the first MCS set includes an MCS with constant amplitude and an MCS with non-constant amplitude.

Optionally, the first signal is used for sensing and communication.

Optionally, the MCS with constant amplitude includes a first MCS. A value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or the value obtained by multiplying the coding rate of the first MCS by 1024 is less than or equal to 901, and the modulation scheme of the first MCS is 16PSK.

Optionally, the MCS with constant amplitude includes a second MCS, a modulation scheme of the second MCS is 8PSK, and a value obtained by multiplying a coding rate of the second MCS by 1024 is greater than or equal to 620.

Optionally, the MCS with constant amplitude includes a second MCS, a modulation scheme of the second MCS is 8PSK, and a value obtained by multiplying a coding rate of the second MCS by 1024 is greater than or equal to a first value. The first value is a value obtained by multiplying 1024 by a coding rate at which first spectral efficiency is achieved in an 8PSK modulation scheme in a first signal-to-noise ratio, the first signal-to-noise ratio is a signal-to-noise ratio at a first block error rate, and the first spectral efficiency is spectral efficiency achieved in an MCS with a QPSK modulation scheme in the first signal-to-noise ratio.

Optionally, the MCS with constant amplitude includes a third MCS, a modulation scheme of the third MCS is 16PSK, and a value obtained by multiplying a coding rate of the third MCS by 1024 is greater than or equal to 710.

Optionally, the MCS with constant amplitude includes a third MCS, a modulation scheme of the third MCS is 16PSK, and a value obtained by multiplying a coding rate of the third MCS by 1024 is greater than or equal to a second value. The second value is a value obtained by multiplying 1024 by a coding rate at which second spectral efficiency is achieved in a 16PSK modulation scheme in a second signal-to-noise ratio, and the second signal-to-noise ratio is a signal-to-noise ratio at a second block error rate. The second spectral efficiency is greater than third spectral efficiency, and the third spectral efficiency is largest spectral efficiency achieved in an MCS with the 8PSK modulation scheme in the first MCS set at the second BLER.

Optionally, the MCS with constant amplitude includes a fourth MCS, a modulation scheme of the fourth MCS is QPSK, and a value obtained by multiplying a coding rate of the fourth MCS by 1024 is greater than a threshold. The threshold is a value obtained by multiplying a coding rate of a fifth MCS by 1024, the fifth MCS is an MCS with a QPSK modulation scheme and a highest coding rate in a second MCS set, and the second MCS set includes an MCS with constant amplitude and an MCS with non-constant amplitude.

Optionally, the MCS with constant amplitude includes a fourth MCS, a modulation scheme of the fourth MCS is QPSK, and a coding rate of the fourth MCS is greater than a coding rate of a fifth MCS. The fifth MCS is an MCS with a QPSK modulation scheme and a highest coding rate in a second MCS set, and the second MCS set includes an MCS with constant amplitude and an MCS with non-constant amplitude.

Optionally, a modulation scheme of the MCS with constant amplitude includes at least one of the following: binary phase shift keying BPSK, QPSK, 8PSK, or 16PSK.

Optionally, the MCS with non-constant amplitude includes an MCS with a 64QAM modulation scheme.

In still some embodiments, the processing module 1901 is configured to determine a first channel quality indicator CQI, and the transceiver module 1902 is configured to send third information. The third information indicates the first CQI. The first CQI belongs to a first CQI set, and amplitude of a modulation scheme of a CQI in the first CQI set is constant.

When the communication apparatus 190 is configured to implement a function of the network device, in some embodiments, the transceiver module 1902 is configured to send first information, where the first information indicates a modulation and coding scheme MCS of a first signal; and the processing module 1901 is configured to send or receive the first signal according to the MCS of the first signal through the transceiver module 1902. The MCS of the first signal belongs to a first MCS set, and amplitude of an MCS in the first MCS set is constant.

Optionally, the first signal is used for sensing and communication.

Optionally, the first MCS set includes a first MCS. A value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or the value obtained by multiplying the coding rate of the first MCS by 1024 is less than or equal to 901, and the modulation scheme of the first MCS is 16PSK.

Optionally, the first MCS set includes a second MCS, a modulation scheme of the second MCS is 8PSK, and a value obtained by multiplying a coding rate of the second MCS by 1024 is greater than or equal to 620.

Optionally, the first MCS set includes a second MCS, a modulation scheme of the second MCS is 8PSK, and a value obtained by multiplying a coding rate of the second MCS by 1024 is greater than or equal to a first value. The first value is a value obtained by multiplying 1024 by a coding rate at which first spectral efficiency is achieved in an 8PSK modulation scheme in a first signal-to-noise ratio, the first signal-to-noise ratio is a signal-to-noise ratio at a first block error rate, and the first spectral efficiency is spectral efficiency achieved in an MCS with a QPSK modulation scheme in the first signal-to-noise ratio.

Optionally, the first MCS set includes a third MCS, a modulation scheme of the third MCS is 16PSK, and a value obtained by multiplying a coding rate of the third MCS by 1024 is greater than or equal to 710.

Optionally, the first MCS set includes a third MCS, a modulation scheme of the third MCS is 16PSK, and a value obtained by multiplying a coding rate of the third MCS by 1024 is greater than or equal to a second value. The second value is a value obtained by multiplying 1024 by a coding rate at which second spectral efficiency is achieved in a 16PSK modulation scheme in a second signal-to-noise ratio, and the second signal-to-noise ratio is a signal-to-noise ratio at a second block error rate. The second spectral efficiency is greater than third spectral efficiency, and the third spectral efficiency is spectral efficiency that is achieved in an MCS with the 8PSK modulation scheme in the second signal-to-noise ratio.

Optionally, the first MCS set includes a fourth MCS, a modulation scheme of the fourth MCS is QPSK, and a value obtained by multiplying a coding rate of the fourth MCS by 1024 is greater than a threshold. The threshold is a value obtained by multiplying a coding rate of a fifth MCS by 1024, the fifth MCS is an MCS with a QPSK modulation scheme and a highest coding rate in a second MCS set, and the second MCS set includes an MCS with constant amplitude and an MCS with non-constant amplitude.

Optionally, the first MCS set includes a fourth MCS, a modulation scheme of the fourth MCS is QPSK, and a coding rate of the fourth MCS is greater than a coding rate of a fifth MCS. The fifth MCS is an MCS with a QPSK modulation scheme and a highest coding rate in a second MCS set, and the second MCS set includes an MCS with constant amplitude and an MCS with non-constant amplitude.

Optionally, a modulation scheme of the MCS in the first MCS set includes at least one of the following: binary phase shift keying BPSK, QPSK, 8PSK, or 16PSK.

Optionally, a value obtained by multiplying a coding rate of the $n^{th}$ MCS in the first MCS set by 1024 is a value obtained by multiplying a coding rate of the $n^{th}$ MCS in a third MCS set by 1024, the third MCS set includes an MCS with constant amplitude and an MCS with non-constant amplitude, and n is a positive integer.

Optionally, the transceiver module 1902 is further configured to send second information. The second information indicates that the first MCS set is used for sensing and communication.

In some other embodiments, the transceiver module 1902 is configured to receive third information, where the third information indicates a first channel quality indicator CQI; and the processing module 1901 is configured to determine a modulation and coding scheme MCS based on the first CQI. The first CQI belongs to a first CQI set, and amplitude of a modulation scheme of a CQI in the first CQI set is constant.

All related content of the steps in the foregoing method embodiments may be cited in function descriptions of the corresponding functional modules. Details are not described herein again.

In this application, the communication apparatus 190 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 190 in FIG. 19 is a chip or a chip system, a function/implementation process of the transceiver module 1902 may be implemented by using an input/output interface (or a communication interface) of the chip or the chip system, and a function/implementation process of the processing module 1901 may be implemented by using a processor (or a processing circuit) of the chip or the chip system.

Because the communication apparatus 190 provided in this embodiment may perform the foregoing methods, for technical effects that can be achieved by the communication apparatus 190, reference may be made to the foregoing method embodiments. Details are not described herein again.

In a possible product form, the network device or the terminal device in embodiments of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuitry, or any combination of circuits capable of performing various functions described throughout this application.

In another possible product form, the network device or the terminal device in embodiments of this application may be implemented in a general bus architecture. For ease of description, refer to FIG. 20. FIG. 20 is a diagram of a structure of a communication apparatus 2000 according to an embodiment of this application. The communication apparatus 2000 includes a processor 2001 and a transceiver 2002. The communication apparatus 2000 may be a terminal device, or a chip or a chip system in the terminal device. Alternatively, the communication apparatus 2000 may be a network device, or a chip or a module in the network device. FIG. 20 shows only main components of the communication apparatus 2000. In addition to the processor 2001 and the transceiver 2002, the communication apparatus may further include a memory 2003 and an input/output apparatus (which is not shown in the figure).

Optionally, the processor 2001 is mainly configured to: process a communication protocol and communication data, control the entire communication apparatus, execute a software program, and process data of the software program. The memory 2003 is mainly configured to store the software program and data. The transceiver 2002 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 2001, the transceiver 2002, and the memory 2003 may be connected through a communication bus.

After the communication apparatus is powered on, the processor 2001 may read the software program in the memory 2003, interpret and execute instructions of the software program, and process data of the software program. When data needs to be sent wirelessly, the processor 2001 performs baseband processing on the to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 2001. The processor 2001 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in hardware implementation, a person skilled in the art may figure out that the communication apparatus 1900 may be in a form of the communication apparatus 2000 shown in FIG. 20.

In an example, the function/implementation process of the processing module 1901 in FIG. 19 may be implemented by the processor 2001 in the communication apparatus 2000 shown in FIG. 20 by invoking computer-executable instructions stored in the memory 2003. The function/implementation process of the transceiver module 1902 in FIG. 19 may be implemented by the transceiver 2002 in the communication apparatus 2000 shown in FIG. 20.

In still another possible product form, the network device or the terminal device in this application may use a composition structure shown in FIG. 21, or include components shown in FIG. 21. FIG. 21 is a diagram of composition of a communication apparatus 2100 according to this application. The communication apparatus 2100 may be a terminal device, or a chip or a system on chip in the terminal device, or may be a network device, or a module, a chip, or a system on chip in the network device.

As shown in FIG. 21, the communication apparatus 2100 includes at least one processor 2101 and at least one communication interface (in FIG. 21, only an example in which one communication interface 2104 and one processor 2101 are included is used for description). Optionally, the communication apparatus 2100 may further include a communication bus 2102 and a memory 2103.

The processor 2101 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 2101 may be another apparatus having a processing function, for example, a circuit, a component, or a software module. This is not limited.

The communication bus 2102 is configured to connect different components in the communication apparatus 2100, so that the different components can communicate with each other. The communication bus 2102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 21, but this does not mean that there is only one bus or only one type of bus.

The communication interface 2104 is configured to communicate with another device or a communication network. For example, the communication interface 2104 may be a module, a circuit, a transceiver, or any apparatus that can implement communication. Optionally, the communication interface 2104 may alternatively be an input/output interface located in the processor 2101, and is configured to implement signal input and signal output of the processor.

The memory 2103 may be an apparatus having a storage function, and is configured to store instructions and/or data. The instructions may be a computer program.

For example, the memory 2103 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 2103 may be independent of the processor 2101, or may be integrated with the processor 2101. The memory 2103 may be located inside the communication apparatus 2100, or may be located outside the communication apparatus 2100. This is not limited. The processor 2101 may be configured to execute the instructions stored in the memory 2103, to implement a method provided in the following embodiments of this application.

In an optional implementation, the communication apparatus 2100 may further include an output device 2105 and an input device 2106. The output device 2105 communicates with the processor 2101, and may display information in a plurality of manners. For example, the output device 2105 may be a liquid crystal display (liquid crystal display, LCD), a light emitting diode (light emitting diode, LED) display device, a cathode ray tube (cathode ray tube, CRT) display device, a projector (projector), or the like. The input device 2106 communicates with the processor 2101, and may receive an input from a user in a plurality of manners. For example, the input device 2106 may be a mouse, a keyboard, a touchscreen device, or a sensor device.

In some embodiments, in hardware implementation, a person skilled in the art may figure out that the communication apparatus 1900 may be in a form of the communication apparatus 2100 shown in FIG. 21.

In an example, the function/implementation process of the processing module 1901 in FIG. 19 may be implemented by the processor 2101 in the communication apparatus 2100 shown in FIG. 21 by invoking computer-executable instructions stored in the memory 2103. The function/implementation process of the transceiver module 1902 in FIG. 19 may be implemented by the communication interface 2104 in the communication apparatus 2100 shown in FIG. 21.

It should be noted that the structure shown in FIG. 21 does not constitute a specific limitation on the network device or the terminal device. For example, in some other embodiments of this application, the network device or the terminal device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprise" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

   receiving first information, wherein the first information indicates a modulation and coding scheme MCS of a first signal, the MCS of the first signal belongs to a first MCS set, and amplitude of a modulation symbol corresponding to an MCS in the first MCS set is constant; and
   receiving or sending the first signal according to the MCS of the first signal.

2. The method according to claim 1, wherein the first signal is used for sensing and communication.

3. The method according to claim 1 or 2, wherein the first MCS set comprises a first MCS; and

   a value obtained by multiplying a coding rate of the first MCS by 1024 is less than or equal to 948, and a modulation scheme of the first MCS is quadrature phase shift keying QPSK, 8 phase shift keying PSK, or 16 phase shift keying PSK; or
   the value obtained by multiplying the coding rate of the first MCS by 1024 is less than or equal to 901, and the modulation scheme of the first MCS is 16PSK.

4. The method according to any one of claims 1 to 3, wherein the first MCS set comprises a second MCS, a modulation scheme of the second MCS is 8PSK, and a value obtained by multiplying a coding rate of the second MCS by 1024 is greater than or equal to 620.

5. The method according to any one of claims 1 to 4, wherein the first MCS set comprises a third MCS, a modulation scheme of the third MCS is 16PSK, and a value obtained by multiplying a coding rate of the third MCS by 1024 is greater than or equal to 710.

6. The method according to any one of claims 1 to 5, wherein the first MCS set comprises a fourth MCS, a modulation scheme of the fourth MCS is QPSK, and a value obtained by multiplying a coding rate of the fourth MCS by 1024 is greater than a threshold; and
   the threshold is a value obtained by multiplying a coding rate of a fifth MCS by 1024, the fifth MCS is an MCS with a QPSK modulation scheme and a highest coding rate in a second MCS set, and the second MCS set comprises an MCS with constant amplitude and an MCS with non-constant amplitude.

7. The method according to any one of claims 1 to 6, wherein a modulation scheme of an MCS in the first MCS set comprises at least one of the following: binary phase shift keying BPSK, QPSK, 8PSK, or 16PSK.

8. The method according to any one of claims 1 to 7, wherein the first MCS set comprises at least one of the following MCSs:

   a modulation order: 2, and a target coding rate ×[1024]: 719;
   a modulation order: 2, and a target coding rate ×[1024]: 772;
   a modulation order: 2, and a target coding rate ×[1024]: 841;
   a modulation order: 2, and a target coding rate ×[1024]: 910;
   a modulation order: 2, and a target coding rate ×[1024]: 948;
   a modulation order: 3, and a target coding rate ×[1024]: 666;
   a modulation order: 3, and a target coding rate ×[1024]: 719;
   a modulation order: 3, and a target coding rate ×[1024]: 772;
   a modulation order: 3, and a target coding rate ×[1024]: 822;
   a modulation order: 3, and a target coding rate ×[1024]: 873;
   a modulation order: 3, and a target coding rate ×[1024]: 910; or
   a modulation order: 3, and a target coding rate ×[1024]: 948, wherein
   the modulation order 2 indicates that a modulation scheme is QPSK, and the modulation order 3 indicates that a modulation scheme is 8PSK.

9. The method according to any one of claims 1 to 7, wherein the first MCS set comprises at least one of the following MCSs:

a modulation order: 2, and a target coding rate ×[1024]: 308;
a modulation order: 2, and a target coding rate ×[1024]: 379;
a modulation order: 2, and a target coding rate ×[1024]: 449;
a modulation order: 2, and a target coding rate ×[1024]: 526;
a modulation order: 2, and a target coding rate ×[1024]: 602;
a modulation order: 2, and a target coding rate ×[1024]: 679;
a modulation order: 2, and a target coding rate ×[1024]: 772;
a modulation order: 2, and a target coding rate ×[1024]: 841;
a modulation order: 2, and a target coding rate ×[1024]: 948;
a modulation order: 3, and a target coding rate ×[1024]: 679;
a modulation order: 3, and a target coding rate ×[1024]: 772;
a modulation order: 3, and a target coding rate ×[1024]: 841;
a modulation order: 3, and a target coding rate ×[1024]: 948;
a modulation order: 4, and a target coding rate ×[1024]: 772;
a modulation order: 4, and a target coding rate ×[1024]: 841; or
a modulation order: 4, and a target coding rate ×[1024]: 948, wherein
the modulation order 2 indicates that a modulation scheme is QPSK, the modulation order 3 indicates that a modulation scheme is 8PSK, and the modulation order 4 indicates that a modulation scheme is 16PSK.

10. The method according to any one of claims 1 to 7, wherein the first MCS set comprises at least one of the following MCSs:

a modulation order: 2, and a target coding rate ×[1024]: 635;
a modulation order: 2, and a target coding rate ×[1024]: 679;
a modulation order: 2, and a target coding rate ×[1024]: 748;
a modulation order: 2, and a target coding rate ×[1024]: 798;
a modulation order: 2, and a target coding rate ×[1024]: 850;
a modulation order: 2, and a target coding rate ×[1024]: 889;
a modulation order: 2, and a target coding rate ×[1024]: 910;
a modulation order: 2, and a target coding rate ×[1024]: 948;
a modulation order: 3, and a target coding rate ×[1024]: 707;
a modulation order: 3, and a target coding rate ×[1024]: 748;
a modulation order: 3, and a target coding rate ×[1024]: 809;
a modulation order: 3, and a target coding rate ×[1024]: 850;
a modulation order: 3, and a target coding rate ×[1024]: 901;
a modulation order: 3, and a target coding rate ×[1024]: 921; or
a modulation order: 3, and a target coding rate ×[1024]: 948, wherein
the modulation order 2 indicates that a modulation scheme is QPSK, and the modulation order 3 indicates that a modulation scheme is 8PSK.

11. The method according to any one of claims 1 to 7, wherein the first MCS set comprises at least one of the following MCSs:

a modulation order: 2, and a target coding rate ×[1024] : 251;
a modulation order: 2, and a target coding rate ×[1024]: 308;
a modulation order: 2, and a target coding rate ×[1024]: 379;
a modulation order: 2, and a target coding rate ×[1024]: 449;
a modulation order: 2, and a target coding rate ×[1024]: 526;
a modulation order: 2, and a target coding rate ×[1024]: 602;
a modulation order: 2, and a target coding rate ×[1024]: 695;
a modulation order: 2, and a target coding rate ×[1024]: 775;
a modulation order: 2, and a target coding rate ×[1024]: 850;
a modulation order: 2, and a target coding rate ×[1024]: 921;
a modulation order: 2, and a target coding rate ×[1024]: 948;
a modulation order: 3, and a target coding rate ×[1024]: 707;
a modulation order: 3, and a target coding rate ×[1024]: 795;
a modulation order: 3, and a target coding rate ×[1024]: 850;
a modulation order: 3, and a target coding rate ×[1024]: 921; or

a modulation order: 3, and a target coding rate $\times[1024]$: 948, wherein
the modulation order 2 indicates that a modulation scheme is QPSK, and the modulation order 3 indicates that a modulation scheme is 8PSK.

12. The method according to any one of claims 1 to 7, wherein the first MCS set comprises at least one of the following MCSs:

a modulation order: 2, and a target coding rate $\times[1024]$: 748;
a modulation order: 2, and a target coding rate $\times[1024]$: 798;
a modulation order: 2, and a target coding rate $\times[1024]$: 871;
a modulation order: 2, and a target coding rate $\times[1024]$: 910;
a modulation order: 2, and a target coding rate $\times[1024]$: 948;
a modulation order: 3, and a target coding rate $\times[1024]$: 707;
a modulation order: 3, and a target coding rate $\times[1024]$: 748;
a modulation order: 3, and a target coding rate $\times[1024]$: 809;
a modulation order: 3, and a target coding rate $\times[1024]$: 850;
a modulation order: 3, and a target coding rate $\times[1024]$: 901;
a modulation order: 3, and a target coding rate $\times[1024]$: 921;
a modulation order: 3, and a target coding rate $\times[1024]$: 948;
a modulation order: 4, and a target coding rate $\times[1024]$: 748;
a modulation order: 4, and a target coding rate $\times[1024]$: 798;
a modulation order: 4, and a target coding rate $\times[1024]$: 850;
a modulation order: 4, and a target coding rate $\times[1024]$: 870;
a modulation order: 4, and a target coding rate $\times[1024]$: 901;
a modulation order: 4, and a target coding rate $\times[1024]$: 921; or
a modulation order: 4, and a target coding rate $\times[1024]$: 948, wherein
the modulation order 2 indicates that a modulation scheme is QPSK, the modulation order 3 indicates that a modulation scheme is 8PSK, and the modulation order 4 indicates that a modulation scheme is 16PSK.

13. The method according to any one of claims 1 to 12, wherein a value obtained by multiplying a coding rate of the $n^{th}$ MCS in the first MCS set by 1024 is a value obtained by multiplying a coding rate of the $n^{th}$ MCS in a third MCS set by 1024, the third MCS set comprises an MCS with constant amplitude and an MCS with non-constant amplitude, and n is a positive integer.

14. The method according to claim 13, wherein the method further comprises:
receiving second information, wherein the second information indicates that the first MCS set is used for sensing and communication.

15. A communication method, wherein the method comprises:

sending first information, wherein the first information indicates a modulation and coding scheme MCS of a first signal, the MCS of the first signal belongs to a first MCS set, and amplitude of an MCS in the first MCS set is constant; and
sending or receiving the first signal according to the MCS of the first signal.

16. The method according to claim 15, wherein the first signal is used for sensing and communication.

17. The method according to claim 15 or 16, wherein the first MCS set comprises a first MCS; and

a value obtained by multiplying a coding rate of the first MCS by 1024 is less than or equal to 948, and a modulation scheme of the first MCS is quadrature phase shift keying QPSK, 8 phase shift keying 8PSK, or 16 phase shift keying PSK; or
the value obtained by multiplying the coding rate of the first MCS by 1024 is less than or equal to 901, and the modulation scheme of the first MCS is 16PSK.

18. The method according to any one of claims 15 to 17, wherein the first MCS set comprises a second MCS, a modulation scheme of the second MCS is 8PSK, and a value obtained by multiplying a coding rate of the second MCS by 1024 is greater than or equal to 620.

19. The method according to any one of claims 15 to 18, wherein the first MCS set comprises a third MCS, a modulation scheme of the third MCS is 16PSK, and a value obtained by multiplying a coding rate of the third MCS by 1024 is greater than or equal to 710.

20. The method according to any one of claims 15 to 19, wherein the first MCS set comprises a fourth MCS, a modulation scheme of the fourth MCS is QPSK, and a value obtained by multiplying a coding rate of the fourth MCS by 1024 is greater than a threshold; and
the threshold is a value obtained by multiplying a coding rate of a fifth MCS by 1024, the fifth MCS is an MCS with a QPSK modulation scheme and a highest coding rate in a second MCS set, and the second MCS set comprises an MCS with constant amplitude and an MCS with non-constant amplitude.

21. The method according to any one of claims 15 to 20, wherein a modulation scheme of an MCS in the first MCS set comprises at least one of the following: binary phase shift keying BPSK, QPSK, 8PSK, or 16PSK.

22. The method according to any one of claims 15 to 21, wherein a value obtained by multiplying a coding rate of the $n^{th}$ MCS in the first MCS set by 1024 is a value obtained by multiplying a coding rate of the $n^{th}$ MCS in a third MCS set by 1024, the third MCS set comprises an MCS with constant amplitude and an MCS with non-constant amplitude, and n is a positive integer.

23. The method according to claim 22, wherein the method further comprises:
sending second information, wherein the second information indicates that the first MCS set is used for sensing and communication.

24. A communication apparatus, wherein the communication apparatus comprises a module configured to implement the method according to any one of claims 1 to 14.

25. A communication apparatus, wherein the communication apparatus comprises a module configured to implement the method according to any one of claims 15 to 23.

26. A communication apparatus, wherein the communication apparatus comprises a processor, and the processor is configured to run a computer program or instructions, to enable the communication apparatus to perform the method according to any one of claims 1 to 14.

27. A communication apparatus, wherein the communication apparatus comprises a processor, and the processor is configured to run a computer program or instructions, to enable the communication apparatus to perform the method according to any one of claims 15 to 23.

28. A computer-readable storage medium, wherein the computer-readable storage medium stores computer instructions or a program; and when the computer instructions or the program is run on a computer, the method according to any one of claims 1 to 14 is performed.

29. A computer-readable storage medium, wherein the computer-readable storage medium stores computer instructions or a program; and when the computer instructions or the program is run on a computer, the method according to any one of claims 15 to 23 is performed.

FIG. 1

Sensing signal: One symbol is
occupied in every seven symbols

Sensing signal: Two symbols are
occupied in every seven symbols

FIG. 2

| | Communication signal | | Sensing-communication signal |

FIG. 3

Network device

Terminal device

S401: First information, indicating an MCS of a first signal, where the MCS of the first signal belongs to a first MCS set, and amplitude of a modulation symbol corresponding to an MCS in the first MCS set is constant

S402: First signal (sending or receiving according to the MCS of the first signal)

S403: Receive an echo signal of the first signal

FIG. 4

+135°    +45°

−135°    −45°

QPSK

64QAM

FIG. 5

FIG. 6a

FIG. 6b

FIG. 7

FIG. 8

FIG. 9

FIG. 10

FIG. 11

FIG. 12

FIG. 13

FIG. 14

```
┌─────────┐                                        ┌─────────┐
│ Network │                                        │ Terminal│
│ device  │                                        │ device  │
└─────────┘                                        └─────────┘
     │    S1501: Information A, used to configure a time-   │
     │         frequency resource of a first signal         │
     │─────────────────────────────────────────────────────▶│
┌──────────────────────────────┐                            │
│ S1502: Determine an MCS and a│                            │
│     TBS of the first signal  │                            │
└──────────────────────────────┘                            │
     │      S1503: Information B, indicating the MCS         │
     │                of the first signal                   │
     │─────────────────────────────────────────────────────▶│
     │      S1504: First signal (sending or receiving        │
     │      according to the MCS of the first signal)        │
     │─────────────────────────────────────────────────────▶│
┌ ─ ─ ─ ─ ─ ─ ─ ─ ─ ─ ─ ─ ─ ─ ─┐                            │
│ S1505: Receive an echo signal of the│                      │
│              first signal     │                            │
└ ─ ─ ─ ─ ─ ─ ─ ─ ─ ─ ─ ─ ─ ─ ─┘                            │
```

FIG. 15

```
┌─────────┐                                        ┌─────────┐
│ Network │                                        │ Terminal│
│ device  │                                        │ device  │
└─────────┘                                        └─────────┘
     │    S1601: Information A, used to configure a time-   │
     │         frequency resource of a first signal         │
     │─────────────────────────────────────────────────────▶│
┌──────────────────────────────┐                            │
│ S1602: Determine an MCS and a│                            │
│     TBS of the first signal  │                            │
└──────────────────────────────┘                            │
     │  S1603: Information B and second information,         │
     │  where the information B indicates the MCS of         │
     │  the first signal, and the second information         │
     │  indicates that a first MCS set is used for           │
     │         communication and sensing                     │
     │─────────────────────────────────────────────────────▶│
     │      S1604: First signal (sending or receiving        │
     │      according to the MCS of the first signal)        │
     │─────────────────────────────────────────────────────▶│
┌ ─ ─ ─ ─ ─ ─ ─ ─ ─ ─ ─ ─ ─ ─ ─┐                            │
│ S1605: Receive an echo signal of the│                      │
│              first signal     │                            │
└ ─ ─ ─ ─ ─ ─ ─ ─ ─ ─ ─ ─ ─ ─ ─┘                            │
```

FIG. 16

```
┌──────────────┐                                    ┌──────────────┐
│   Terminal   │                                    │   Network    │
│   device     │                                    │   device     │
└──────┬───────┘                                    └──────┬───────┘
       │                                                   │
┌──────┴──────────────────────────┐                        │
│ S1701: Determine a first CQI, where                       │
│ the first CQI belongs to a first CQI                      │
│ set, and amplitude of a modulation                        │
│ symbol corresponding to a CQI in                          │
│ the first CQI set is constant     │                       │
└──────┬──────────────────────────┘                        │
       │  S1702: Third information, indicating the first CQI │
       │───────────────────────────────────────────────────▶│
       │                                                   │
       │              ┌────────────────────────────────────┴──────┐
       │              │ S1703: Determine an MCS based              │
       │              │        on the first CQI                    │
       │              └────────────────────────────────────┬──────┘
       │                                                   │
```

FIG. 17

```
┌──────────────┐                                    ┌──────────────┐
│   Terminal   │                                    │   Network    │
│   device     │                                    │   device     │
└──────┬───────┘                                    └──────┬───────┘
       │  S1700a: Configure a first CQI set, where          │
       │  amplitude of a modulation symbol corresponding    │
       │       to a CQI in the first CQI set is constant     │
       │◀ ─ ─ ─ ─ ─ ─ ─ ─ ─ ─ ─ ─ ─ ─ ─ ─ ─ ─ ─ ─ ─ ─ ─ ─│
       │                                                   │
       │              S1700b: Pilot signal                  │
       │◀ ─ ─ ─ ─ ─ ─ ─ ─ ─ ─ ─ ─ ─ ─ ─ ─ ─ ─ ─ ─ ─ ─ ─ ─│
       │                                                   │
┌──────┴──────────────────────────┐                        │
│ S1701: Measure an SINR of the pilot                       │
│ signal and determine a first CQI,                         │
│ where the first CQI belongs to the                        │
│        first CQI set               │                      │
└──────┬──────────────────────────┘                        │
       │  S1702: Third information, indicating the first CQI │
       │───────────────────────────────────────────────────▶│
       │                                                   │
       │              ┌────────────────────────────────────┴──────┐
       │              │ S1703: Determine an MCS based              │
       │              │        on the first CQI                    │
       │              └────────────────────────────────────┬──────┘
       │                                                   │
```

FIG. 18

Communication apparatus — 190

Processing module — 1901

Transceiver module — 1902

FIG. 19

Communication apparatus 2000

2001

Processor

Instructions

2003

Memory

Instructions

Transceiver — 2002

Radio frequency circuit

Antenna

FIG. 20

2100

2101

Processor

CPU 0

CPU 1

2103

Memory

2102

2104

Communication interface

2105

Output device

2106

Input device

FIG. 21

<div align="center">

**INTERNATIONAL SEARCH REPORT**

</div>

| International application No. |
|---|
| **PCT/CN2023/100030** |

| **A.** | **CLASSIFICATION OF SUBJECT MATTER** |
|---|---|

H04L1/00(2006.01)i

According to International Patent Classification (IPC) or to both national classification and IPC

| **B.** | **FIELDS SEARCHED** |
|---|---|

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CJFD, CNABS, CNTXT, DWPI, ENTXTC, WPABSC: 幅度, 幅值, 包络, 不变, 固定, 恒定, 相同, 调制, 调制编码方式, 调制和编码方式, 符号, 集合, 通信感知, 指示, MCS, QPSK, BPSK, PSK, 8PSK, 16PSK, amplitude, envelope, invariant, fixed, constant, same, modulate, symbol, set, communication awareness, indicate

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | WO 2022082380 A1 (HUAWEI TECHNOLOGIES CO., LTD.) 28 April 2022 (2022-04-28) description, pages 7-18, and figures 1-3 | 1-29 |
| Y | US 6748021 B1 (NORTEL NETWORKS LTD.) 08 June 2004 (2004-06-08) description, column 6, line 17 to column 10, line 18 | 1-29 |
| A | CN 113765630 A (SAMSUNG ELECTRONICS CO., LTD.) 07 December 2021 (2021-12-07) entire document | 1-29 |
| A | WO 2019128403 A1 (ZTE CORP.) 04 July 2019 (2019-07-04) entire document | 1-29 |
| A | US 2020322008 A1 (INTEL IP CORPORATION) 08 October 2020 (2020-10-08) entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2023** | **22 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<div align="center">

54

</div>

**INTERNATIONAL SEARCH REPORT**
**Information on patent family members**

International application No.

**PCT/CN2023/100030**

| Patent document cited in search report | | | Publication date (day/month/year) | Patent family member(s) | | | Publication date (day/month/year) |
|---|---|---|---|---|---|---|---|
| WO | 2022082380 | A1 | 28 April 2022 | KR | 20230084587 | A | 13 June 2023 |
| | | | | EP | 4216463 | A1 | 26 July 2023 |
| US | 6748021 | B1 | 08 June 2004 | None | | | |
| CN | 113765630 | A | 07 December 2021 | US | 2021045112 | A1 | 11 February 2021 |
| | | | | US | 2018359745 | A1 | 13 December 2018 |
| | | | | US | 2020008193 | A1 | 02 January 2020 |
| | | | | KR | 20160118905 | A | 12 October 2016 |
| | | | | EP | 3280086 | A1 | 07 February 2018 |
| | | | | WO | 2016159730 | A1 | 06 October 2016 |
| | | | | CN | 107852287 | A | 27 March 2018 |
| | | | | CN | 113765629 | A | 07 December 2021 |
| | | | | EP | 3944551 | A1 | 26 January 2022 |
| | | | | EP | 3944552 | A1 | 26 January 2022 |
| | | | | US | 2023053253 | A1 | 16 February 2023 |
| WO | 2019128403 | A1 | 04 July 2019 | CN | 109996323 | A | 09 July 2019 |
| US | 2020322008 | A1 | 08 October 2020 | US | 2021006309 | A1 | 07 January 2021 |
| | | | | WO | 2019079011 | A1 | 25 April 2019 |
| | | | | US | 2021006308 | A1 | 07 January 2021 |
| | | | | US | 2020328843 | A1 | 15 October 2020 |
| | | | | US | 2020358491 | A1 | 12 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210851495